(19) Europäisches Patentamt
European Patent Office
Office européen des brevets

(11) **EP 2 916 247 A1**

(12) **EUROPEAN PATENT APPLICATION**
published in accordance with Art. 153(4) EPC

(43) Date of publication:
09.09.2015 Bulletin 2015/37

(51) Int Cl.:
*G06F 19/00* (2011.01)

(21) Application number: 13852061.4

(86) International application number:
PCT/JP2013/079175

(22) Date of filing: 28.10.2013

(87) International publication number:
WO 2014/069421 (08.05.2014 Gazette 2014/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 31.10.2012 JP 2012241260

(71) Applicant: Asahi Glass Company, Limited
Tokyo 100-8405 (JP)

(72) Inventors:
• YANAGIHARA Kazutaka
  Tokyo 100-8405 (JP)
• SAITO Tsunehiro
  Tokyo 100-8405 (JP)

(74) Representative: Müller-Boré & Partner
Patentanwälte PartG mbB
Friedenheimer Brücke 21
80639 München (DE)

(54) **SIMULATION DEVICE, SIMULATION METHOD, AND PROGRAM**

(57) The present invention provides a simulation device which is able to obtain a preferred simulation result. The simulation device calculating a solution of an equation including an advective term, includes: a velocity field acquisition unit which acquires a velocity field; and a solution calculation unit which applies the velocity field acquired by the velocity field acquisition unit to a discretization equation obtained by adding at least two operations to the equation, and calculates a solution of the discretization equation, wherein the two operations includes deformation of the advective term into a conservation form, and a term of correcting an error in the conservation form of the advective term.

*FIG. 5*

**Description**

TECHNICAL FIELD

The present invention relates to a simulation device, a simulation method, and a program.

BACKGROUND ART

In the related art, as a method of using a numerical value of a continuum such as fluid in a simulation, a finite volume method is included. In this finite volume method, a region to be simulated is divided into regions referred to as a cell or a control volume. Then, in each cell, a governing equation is volume integrated, and a solution is calculated by using a discretized equation. In general, when fluid is simulated, a Navier-Stokes equation which is the governing equation is volume integrated, and then the discretized equation is used. When the volume integration is performed, a term referred to as an advective term is converted into a form referred to as a conservation form. Accordingly, a result of the volume integration of the advective term is a surface integration (for example, refer to P. 27 of Non Patent Document 1). Furthermore, in Non Patent Document 1, the advective term is referred to as a convection term. In addition, for a complete conservation form with respect to an incompressible flow, a difference scheme of discretization has been studied (Non Patent Document 2 and Non Patent Document 3).

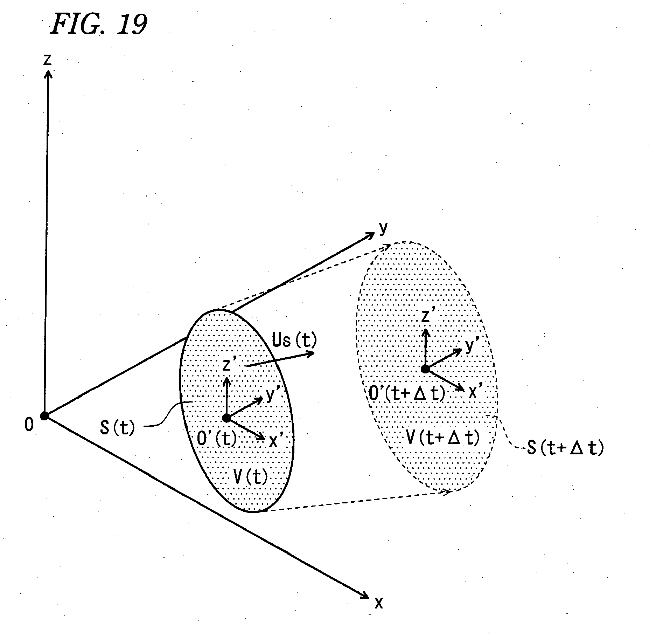

The advective term described above will be described. As illustrated in Fig. 19, an inspection volume V (t) is acquired from the continuum. When the continuum is moved and deformed, the inspection volume V (t) is moved and deformed according to the movement and the deformation of the continuum. Fig. 19 illustrates an aspect in which in a case where time t → t + Δt, and time progresses by Δt, the inspection volume V (t) in a position of an origin O' (t) is moved into a position of O' (t + Δt), and is moved and deformed into a state of an inspection volume V (t + Δt) and a surface S (t + Δt). This movement and the deformation occur according to a movement of a surface S (t) surrounding V (t) at a velocity of a velocity vector $u_s$ (t).

By a limitation operation of V → 0 and Δt → 0, a partial differential equation indicating the continuum is obtained. A describing method of the partial differential equation includes a describing method using a Lagrangian coordinate system, arid a describing method using an Eulerian coordinate system. The Lagrangian coordinate system is a coordinate system having an origin which is moved along with the continuum as illustrated in the origin O' (t) of Fig. 19. The Eulerian coordinate system is a coordinate system which is set separately from the continuum as illustrated in an origin O of Fig. 19. In the Eulerian coordinate system, the origin O is not moved along with the continuum.

A physical value indicated as the continuum is $\phi$, and a partial differential equation of $\phi$ is denoted as the following Expression (1-1) in the Lagrangian coordinate system. When Expression (1-1) is denoted by the Eulerian coordinate system, Expression (1-2) is obtained.

[Formula 1]

$$\frac{\partial \phi}{\partial t} = F'\left(\phi, t, x', y', z', \frac{\partial \phi}{\partial x'}, \frac{\partial \phi}{\partial y'}, \frac{\partial \phi}{\partial z'}, \frac{\partial^2 \phi}{\partial x'^2}, \cdots\right) = 0 \cdots (1-1)$$

$$\frac{D\phi}{Dt} + F\left(\phi, t, x, y, z, \frac{\partial \phi}{\partial x}, \frac{\partial \phi}{\partial y}, \frac{\partial \phi}{\partial z}, \frac{\partial^2 \phi}{\partial x^2}, \cdots\right) = 0 \cdots (1-2)$$

$$\text{Note, } \frac{D\phi}{Dt} \equiv \frac{\partial \phi}{\partial t} + u\frac{\partial \phi}{\partial x} + v\frac{\partial \phi}{\partial y} + w\frac{\partial \phi}{\partial z} \cdots (1-3)$$

Here, u, v, and w are x, y, and z components of a velocity vector u of a -position of coordinates (x, y, z) in the continuum, and the velocity vector u is denoted as Expression (1-4).
[Formula 2]

$$\mathbf{u} = \mathbf{u}(t, x, y, z) = \big(u(t, x, y, z), v(t, x, y, z), w(t, x, y, z)\big) \cdots (1-4)$$

D / Dt which is a left member of Expression (1-3) is -referred to as a total derivation or a substance derivation.

A fourth term (Expression (1-5)) from a second term of a right member of Expression (1-3) is referred to as an advective term.

[Formula 3]

$$u\frac{\partial \phi}{\partial x} + v\frac{\partial \phi}{\partial y} + w\frac{\partial \phi}{\partial z} \quad \cdots (1-5)$$

When an index and an Einstein summation notation are used, Expressions (1-2) and (1-3) are Expressions (1-6) and (1-7). Here, indexes i and j indicate indexes of i = 1, 2, 3 and j = 1, 2, 3, and correspond to 1, 2, 3 → x, y, z. Similarly, when the index is indicated twice, the index accords to the summation notation.

[Formula 4]

$$\frac{D\phi}{Dt} + F\left(\phi, t, x_i, \frac{\partial \phi}{\partial x_i}, \frac{\partial^2 \phi}{\partial x_i^2}, \cdots\right) = 0 \cdots (1-6)$$

$$\frac{D\phi}{Dt} \equiv \frac{\partial \phi}{\partial t} + u_j\frac{\partial \phi}{\partial x_j} \cdots (1-7)$$

As shown below, the substance derivation D / Dt denoted in Expression (1-6) appears in the partial differential equation denoted by the Eulerian coordinate system as a term indicating the movement and the deformation of the continuum according to the time progression of the entire physical value expressed as the continuum. As shown in Expressions (1-3) and (1-7), the substance derivation includes the advective term, and thus the partial differential equation indicated by the substance derivation includes the advective term.

Some examples of the partial differential equation including the substance derivation are as follows.

1) Fluid Dynamics (Navier-Stokes Equation)

A Navier-Stokes equation which is a governing equation of fluid dynamics is denoted as Expression (1-8). In Expression (1-8), t: time, $x_i$ (i = 1, 2, 3): coordinates in a Cartesian system, p: a density of the fluid, $\mu$: a coefficient of viscosity of the fluid, $u_i$ (i = 1, 2, 3): a velocity component of the fluid, and p: pressure. In addition, the indexes i (i = 1, 2, 3) and j (j = 1, 2, 3) indicate components of each direction in each Cartesian coordinate system. In Expression (1-8), the substance derivation appears in a left member. That is, the advective term is included.

[Formula 5]

$$\rho\frac{Du_i}{Dt} = -\frac{\partial p}{\partial x_i} + \frac{\partial}{\partial x_j}\left[\mu\left(\frac{\partial u_i}{\partial x_j} + \frac{\partial u_j}{\partial x_i}\right)\right] \quad \cdots (1-8)$$

2) Equation for Stress Field

An equation for a stress field in the Eulerian coordinate system is Expression (1-9). In Expression (1-9), $\rho$: a density of the continuum, $u_i$ (i = 1, 2, 3): a deformation velocity of the continuum, $\sigma_{ij}$ (i, j = 1, 2, 3): internal stress of the continuum, and $f_i$ = an external force acting on the continuum (for example, gravitation). In Expression (1-9), the substance derivation appears in a left member. That is, the advective term is included.

[Formula 6]

$$\rho\frac{Du_i}{Dt} = -\frac{\partial \sigma_{ij}}{\partial x_j} + \rho f_i \quad \cdots (1-9)$$

3) Equation for Energy Conservation

An energy conservation law is divided into conservation of thermal energy and conservation of kinetic energy. The conservation of kinetic energy is identical to Expression (1-9), and thus here, an equation for conservation of thermal energy is denoted in Expression (1-10). In Expression (1-10), U: internal energy of the continuum, $q_j$ (j = 1, 2, 3): a thermal flow velocity vector component, p: the density of the continuum, y: a heat source (a source/sink of the thermal energy), $\sigma_{ij}$ (i, j = 1, 2, 3): an internal stress tensor of the continuum, and $D_{ij}$ (i,j = 1, 2, 3): a deformation velocity tensor of the continuum. In Expression (1-10), the substance derivation appears in a left member. That is, the advective term is included.

[Formula 7]

$$\rho \frac{DU}{Dt} = -\frac{\partial q_j}{\partial x_j} + \rho \cdot \gamma + \sigma_{ij} \cdot D_{ij} \qquad \cdots (1-10)$$

4) Advection Diffusion Equation

An advection diffusion phenomenon in a continuum of a certain substance C is the following Expression (1-11). In Expression (1-11), C: a concentration of the substance C, $\mu_c$: a diffusion coefficient of the substance C, qc: a source and sink of the substance C, p: the density of the continuum, and $u_j$ (j = 1, 2, 3): a deformation velocity component of the continuum. In Expression (1-11), the substance derivation appears in a left member. That is, the advective term is included.

[Formula 8]

$$\rho \frac{DC}{Dt} = \frac{\partial}{\partial x_j}\left[\mu_c \cdot \frac{\partial C}{\partial x_j}\right] + \rho \cdot q_c \qquad \cdots (1-11)$$

PRIOR ART REFERENCE

NON PATENT DOCUMENT

[Non Patent Document 1] H. K. Versteeg, W. Malalasekera (original article), Matsushita Yosuke, Yasuhiro Saito, Hideyuki Aoki, Takatoshi Miura (joint translator), "Numerical Fluid Dynamics [second edition]", (An Introduction to Computational Fluid Dynamics Second Edition), second edition, Morikita Publishing Co., Ltd., May 30,2011.
[Non Patent Document 2] Morinishi Yohei, [Special Reviews by RYUMON-Prize Award] Fully Conservative Higher Order Finite Difference Schemes for Incompressible Fluid Analysis, Vol. 19 (2000), P. 164-170.
[Non Patent Document 3] Morinishi, Y., Lund, T. S., Vasilyev, O. V., Moin, P., "Fully Conservative Higher Order Finite Difference Schemes for incompressible flow, J. Comput. Phys., Vol. 143 (1998), 90-124.

SUMMARY OF THE INVENTION

PROBLEMS TO BE SOLVED BY THE INVENTION

As described above, the advective term is a term denoted also by the equation including the substance derivation (hereinafter, referred to as a transport equation) not only by the Navier-Stokes equation. Before describing an object of the present invention, as an example of a method for solving an advective term in a conservation form, an expression used in a finite volume method disclosed in Non Patent Document 1 will be described. A transport equation with respect to a variable $\phi$ is denoted as Expression (2-1) or Expression (2-2). As described above, a second term of a left member of Expression (2-2) is an advective term. Furthermore, a Navier-Stokes equation is able to be referred to as a transport equation in which the variable $\phi$ is a velocity u or a momentum pu.

[Formula 9]

$$\frac{D\phi}{Dt} + F\left(\phi\right) = 0 \quad \cdots (2-1)$$

$$\frac{\partial \phi}{\partial t} + u_j \frac{\partial \phi}{\partial x_j} + F\left(\phi\right) = 0 \quad \cdots (2-2)$$

When it is presumed that the density p is constant, a continuum generally satisfies Expression (2-3) which is referred to as a continuity equation.
[Formula 10]

$$\frac{\partial u_i}{\partial x_i} = 0 \quad \cdots (2-3)$$

Therefore, when an equation in which an index i of Expression (2-3) is changed to j, and both members are multiplied by $\phi$ is added to Expression (2-2), Expression (2-4) is obtained. Further, when a sum of a second term and a third term of a left member of Expression (2-4) is deformed, Expression (2-5) is obtained. A second term of a left member of Expression (2-5) is an advective term of a conservation form when the density is constant.
[Formula 11]

$$\frac{\partial \phi}{\partial t} + u_j \frac{\partial \phi}{\partial x_j} + \phi \cdot \frac{\partial u_j}{\partial x_j} + F\left(\phi\right) = 0 \quad \cdots (2-4)$$

$$\frac{\partial \phi}{\partial t} + \frac{\partial u_j \phi}{\partial x_j} + F\left(\phi\right) = 0 \quad \cdots (2-5)$$

In contrast, when the density $\rho$ of the continuum is not constant, and $\rho = \rho$ (t, x, y, z), first, both members of Expression (2-1) and Expression (2-2) are multiplied by $\rho$, and thus Expression (2-6) and Expression (2-7) are obtained. In addition, a continuity equation when the density $\rho$ is not constant is Expression (2-8).
[Formula 12]

$$\rho \frac{D\phi}{Dt} + \rho F\left(\phi\right) = 0 \quad \cdots (2-6)$$

$$\rho \left(\frac{\partial \phi}{\partial t} + u_j \frac{\partial \phi}{\partial x_j}\right) + \rho F\left(\phi\right) = 0 \quad \cdots (2-7)$$

$$\frac{\partial \rho}{\partial t} + \frac{\partial \rho u_i}{\partial x_i} = 0 \quad \cdots (2-8)$$

Similar to Expression (2-4), when an equation in which the index i of Expression (2-8) is changed to j, and both members are multiplied by $\phi$ is added to Expression (2-7), Expression (2-9) is obtained. Further, when a left member of Expression (2-9) is deformed, Expression (2-10) is obtained. A second term of a left member of Expression (2-10) is an advective term of a conservation form when the density is not constant (the density is changed).
[Formula 13]

$$\rho\left(\frac{\partial \phi}{\partial t} + u_j \frac{\partial \phi}{\partial x_j}\right) + \phi\left(\frac{\partial \rho}{\partial t} + \frac{\partial \rho u_j}{\partial x_j}\right) + \rho F(\phi) = 0 \quad \cdots (2-9)$$

$$\frac{\partial \rho \phi}{\partial t} + \frac{\partial u_j \rho \phi}{\partial x_j} + \rho F(\phi) = 0 \quad \cdots (2-10)$$

In Expression (2-10), a substitution is performed such as $\rho\phi \rightarrow \phi'$, and $\rho F(\phi) \rightarrow F'(\phi')$, Expression (2-10) is able to be expressed in the same form as that of Expression (2-5), and thus hereinafter, the transport equation of the conservation form of Expression (2-5) will be primarily described.

When Expression (2-5) is integrated by a volume of a control volume, Expression (2-11) is obtained. In addition, similarly, when Continuity Equation (2-3) is integrated by the volume of the control volume, Expression (2-12) is obtained.

[Formula 14]

$$\int_V \frac{\partial \phi}{\partial t} dV + \int_S (\boldsymbol{n} \cdot \boldsymbol{u}) \phi \, dS + \int_V F(\phi) dV = 0 \quad \cdots (2-11)$$

Here, V: Volume of Control Volume
$\int_V dV$: Integration with respect to Volume V
S: Surface Area of Control Volume
$\int_S dS$: Integration with respect to Area S
n: Unit Normal Vector of S, $n_i$: Component of n
u: Deformation Velocity Vector, $u_i$: Component of u

$$\int_S (\boldsymbol{n} \cdot \boldsymbol{u}) \, dS = 0 \quad \cdots (2-12)$$

When each of Expression (2-11) and Expression (2-12) which are integration equations is discretized with respect to the control volume a having m boundary surfaces $E_{ab}$ (b is 1 to m), the following Expression (2-13) and Expression (2-14) are obtained. Furthermore, a [discretization term of F ($\phi$)] which is a third term of a left member of Expression (2-13) is a term in which F ($\phi$) is volume integrated and discretized, but the detailed description will be omitted.

[Formula 15]

$$V_a \frac{\partial \phi_a}{\partial t} + \sum_{b=1}^{m}\left[S_{ab} \cdot (\boldsymbol{n}_{ab} \cdot \boldsymbol{u}_{ab}) \cdot \phi_{ab}\right] + \left[\text{Discretization Term of } F(\phi)\right] = 0$$
$$\cdots (2-13)$$

$$\sum_{b=1}^{m}[S_{ab} \cdot (\boldsymbol{n}_{ab} \cdot \boldsymbol{u}_{ab})] = 0 \quad \cdots (2-14)$$

Here, $V_a$: Volume of Control Volume a
$S_{ab}$: Area of Boundary Surface $E_{ab}$
$n_{ab}$: Unit Normal Vector of Boundary Surface $E_{ab}$
$u_{ab}$: Deformation Velocity Vector of Boundary Surface $E_{ab}$
$\phi_a$: Value of $\phi$ in Control Volume a
$\phi_{ab}$: Value of $\phi$ in Boundary Surface $E_{ab}$

In order to easily understand the object of the present invention, Expression (2-15) in which F ($\phi$) = 0 in Expression (2-13) will be described.

[Formula 16]

$$V_a \frac{\partial \phi_a}{\partial t} + \sum_{b=1}^{m} \left[ S_{ab} \cdot (\boldsymbol{n}_{ab} \cdot \boldsymbol{u}_{ab}) \cdot \phi_{ab} \right] = 0 \quad \cdots (2-15)$$

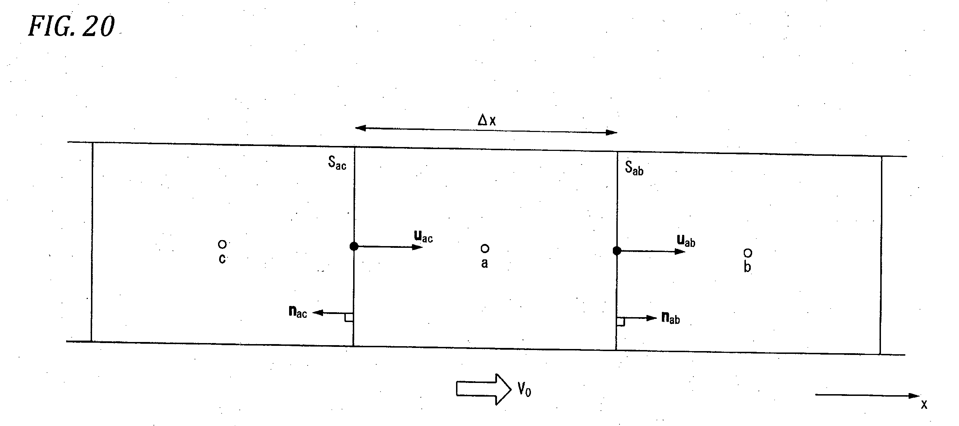

As described above, Expression (2-15) is an equation in which the transport equation of the conservation form with respect to the variable $\phi$ is volume integrated and discretized. That is, Expression (2-15) is an equation indicating an aspect in which a physical value $\phi$ is advected according to the movement and the deformation of the continuum. At a certain point, when $\phi$ is the same value in the entire region of the continuum, in a result of being simulated by Expression (2-15), it is necessary that $\phi$ in the entire region of the continuum is not changed and has the same value even when the continuum is moved and deformed (a condition A). For example, when the physical value $\phi$ is a saline concentration of water, and the saline concentration $\phi$ in the entire region has the same value, the saline concentration $\phi$) is not changed regardless of how the water flows over time. In the condition A, a problem of one-dimensional flow illustrated in Fig. 20 will be considered as an example.

In the one-dimensional flow illustrated in Fig. 20, fluid flows in a positive direction of an x axis direction, and the physical value $\phi$ is advected by the flow. As illustrated in Fig. 20, a flow path of the one-dimensional flow is divided into control volumes a, b, and c along an x axis. Furthermore, the control volume c is adjacent to an upstream side of the control volume a, and the control volume b is adjacent to a downstream side of the control volume a. A cross-sectional area of the flow path is constant as 1. That is, Expression (2-16) is established.

$$S_{ab} = S_{ac} = 1 \; ...(2\text{-}16)$$

In addition, when a boundary surface between the control volumes is perpendicular to the x axis, Expression (2-17) is established. When widths of the respective control volumes are identically $\Delta x$, Expression (2-18) is established. In addition, velocity vectors $u_{ab}$ and $u_{ac}$ in the boundary surface of the control volume a is denoted by Expression (2-19).
[Formula 17]

$$\boldsymbol{n}_{ab} = (1,0,0), \quad \boldsymbol{n}_{ac} = (-1,0,0) \quad \cdots (2-17)$$

$$V_a = S_{ab} \cdot \Delta x = \Delta x \quad \cdots (2-18)$$

$$\boldsymbol{u}_{ab} = (u_{ab},0,0), \quad \boldsymbol{u}_{ac} = (u_{ac},0,0) \quad \cdots (2-19)$$

When Expression (2-15) is expressed by using this, Expression (2-15) becomes Expression (2-20). Similarly, when Continuity Equation (2-14) is expressed by using this, Continuity Equation (2-14) becomes Expression (2-21).
[Formula 18]

$$\Delta x \cdot \frac{\partial \phi_a}{\partial t} + u_{ab} \cdot \phi_{ab} - u_{ac} \cdot \phi_{ac} = 0 \cdots (2-20)$$

$$u_{ab} - u_{ac} = 0 \quad \cdots (2-21)$$

Therefore, when $u_{ab} = u_{ac} = U_0$, and both members of Expression (2-20) are divided by $\Delta x$, Expression (2-22) is obtained.
[Formula 19]

$$\frac{\partial \phi_a}{\partial t} + U_0 \cdot \frac{\phi_{ab} - \phi_{ac}}{\Delta x} = 0 \cdots (2-22)$$

Here, in the entire flow path, when φ is constant, that is, when $\phi_{ab} = \phi_{ac}$, Expression (2-23) is obtained from Expression (2-22). Expression (2-23) indicates that $\phi_a$ is a constant value which does not increase even when time progresses. This satisfies the condition A described in Expression (2-15).
[Formula 20]

$$\frac{\partial \phi_a}{\partial t} = 0 \quad \cdots (2-23)$$

However, a result of an actual simulation calculation includes an error in a numerical value calculation. In addition, a measurement value includes a measurement error. For this reason, neither a velocity obtained by the numerical value calculation nor a velocity obtained by the measurement completely satisfies Continuity Equation (2-14) which is discretized. That is, Expression (2-21) is not satisfied, and $u_{ab} - u_{ac} \neq 0$.
Therefore, the error is $\delta U_0$, and $u_{ab} - u_{ac} = \delta U_0$. When this is assigned to Expression (2-20), Expression (2-24) which is different from Expression (2-23) is obtained even when $\phi_{ab} = \phi_{ac} = \phi$ is constant.
[Formula 21]

$$\frac{\partial \phi_a}{\partial t} = -\frac{\delta U_0}{\Delta x} \cdot \phi \quad \cdots (2-24)$$

Expression (2-24) indicates that when $\delta U_0$ is a positive value, a pseudo sink having a size of $|\delta U_0 \cdot \phi / \Delta x|$ is in the control volume a, and $\phi_a$ decreases as time progresses. In addition, Expression (2-24) indicates that when $\delta U_0$ is a negative value, a pseudo source having a size of $|\delta U_0 \cdot \phi / \Delta x|$ is in the control volume a, and $\phi_a$ increases as time progresses.
That is, when the velocity does not satisfy the continuity equation, the condition A is not satisfied even when Expression (2-15) is used.
Here, the problem of the one-dimensional flow is considered as an example, but the same applies to a two-dimensional transport equation and a three-dimensional transport equation. That is, when Continuity Equation (2-14) is not completely satisfied, Expression (2-25) becomes Expression (2-26) even when φ is constant in the entire calculation region. $\phi_a$ increases or decreases as time progresses, and thus the condition A is not satisfied.
[Formula 22]

$$\sum_{b=1}^{m} [S_{ab} \cdot (\boldsymbol{n}_{ab} \cdot \boldsymbol{u}_{ab})] \neq 0 \quad \cdots (2-25)$$

$$\frac{\partial \phi_a}{\partial t} = \sum_{b=1}^{m} \left[ \frac{S_{ab}}{V_a} \cdot (\boldsymbol{n}_{ab} \cdot \boldsymbol{u}_{ab}) \cdot \phi_{ab} \right] \quad \cdots (2-26)$$

In summary, the following 1) and 2) are considered.

1) The velocity of the continuum which is calculated by the numerical value simulation does not completely satisfy the continuity equation. Even when effective digits increase, and a calculation is performed with sufficiently high accuracy, an error occurs. In addition, the velocity of the continuum which is obtained by the measurement necessarily includes a measurement- error, and thus the continuity equation is not completely satisfied.
2) In the transport equation in which the advective term is in the conservation form, when the velocity does not satisfy the continuity equation, a pseudo source/sink term having a size in proportion to the error occurs.
Further, as described in 1), the size of the pseudo source/sink term is in proportion to the error, and thus the following 3) and 4) are considered.
3) When the error is small, the size of the pseudo source/sink term is also small. In this case, there is a diffusion term included in an equation of a target or a numerical diffusion due to mesh division, and thus an increase or a decrease which occurs by the pseudo source/sink term is diffused and faded. Therefore, it is assumed that a preferred solution is obtained.
4) In a case where an analysis region is in a complicated shape, when the mesh division is performed, a control volume in a deformed shape is usually generated. When the shape of the control volume is deformed, the error easily increases at the time of calculating the velocity by the numerical value simulation. For this reason, the increase or the decrease which occurs by the pseudo source/sink term also becomes greater, and thus the numerical diffusion is not suppressed, accuracy of the solution is degraded, and an abnormal solution is generated. Further, in a significant case, the calculation is diverged.

Thus, in the simulation using the transport equation in which the advective term is in the conservation form, when the velocity does not satisfy the continuity equation, the abnormal solution is generated.

In Non Patent Document 2 and Non Patent Document PL 3, a problem is presented in which, even when the integration equation analytically satisfies the conservation law, the conservation law is not satisfied at the time of discretizing the integration equation. However, in Non Patent Document 2 and Non Patent Document 3, a solution for the problem in which the conservation law is not satisfied is proposed, and according to the solution, the problem is solved by performing deformation such that the conservation law in a discretized equation is satisfied. That is, in Non Patent Document 2 and Non Patent Document 3, any solution for a problem of the error in the numerical value calculation is not proposed. For this reason, even when accuracy is improved by satisfying the conservation law in a discretization step using the method of Non Patent Document 2 and Non Patent Document 3, the abnormal solution is still generated when a velocity field which is input data of the discretization equation has an error.

The present invention is made in consideration of the circumstances described above, and is to provide a simulation device, a simulation method, and a program which are able to obtain a preferred simulation result.

SOLUTION TO THE PROBLEMS

As described above, in the related art, on the premise that Continuity Equations (2-3) and (2-8) are completely satisfied when the transport equation is deformed into the conservation form, an equation in which Continuity Equations (2-3) and (2-8) are multiplied by $\phi$ is added to the transport equation. However, as described above, the error is included in both the velocity calculated by the numerical value simulation and the velocity obtained by the measurement, and thus the continuity equation is not completely satisfied. That is, the premise is not established, and thus the error occurs in the advective term in the conservation form. Therefore, in the present invention, a term of correcting the error which occurs in the advective term in the conservation form is included in an equation, and a solution of the equation is calculated.

The studies of the related art have been conducted focused on a problem in discretization. However, when the numerical value simulation is industrially used, in general, in a calculation of enormous capacity, a calculation target has a complicated shape, and thus recurrence of a complicated phenomenon is required. For this reason, the present inventors have focused on a fact that, when the numerical value simulation is used, a countermeasure simply improving accuracy of the discretization is not sufficient, but a countermeasure premised on the existence of the error in the numerical value calculation is important, and thus have accomplished the invention.

(1) The present invention is made to solve the above-mentioned problems, and according to one aspect of the present invention, there is provided a simulation device calculating a solution of an equation including an advective term, including: a velocity field acquisition unit which acquires a velocity field; and a solution calculation unit which applies the velocity field acquired by the velocity field acquisition unit to a discretization equation obtained by adding at least two operations to the equation, and calculates a solution of the discretization equation, wherein the two operations includes deformation of the advective term into a conservation form, and a term of correcting an error in the conservation form of the advective term.

(2) Further, according to another aspect of the present invention, the term of correcting the error in the conservation form of the advective term is a term of correcting an error which occurs due to the fact that the velocity field does not satisfy a continuity equation.

(3) Further, according to still another aspect of the present invention, the term of correcting the error is a term obtained by performing at least an integration which is identical to an integration with respect to the equation with respect to the continuity equation.

(4) Further, according to still another aspect of the present invention, the solution calculation unit calculates a velocity field in a next time step by using at least the continuity equation, and the velocity field acquired by the velocity field acquisition unit is a velocity field calculated by the solution calculation unit.

(5) Further, according to still another aspect of the present invention, the velocity field acquisition unit acquires a velocity field which is stored in advance.

(6) Further, according to still another aspect of the present invention, there is provided a simulation method calculating a solution of an equation including an advective term, including: a first step of acquiring a velocity field; and a second step of applying the velocity field acquired in the first step to a discretization equation obtained by adding at least two operations to the equation including the advective term, and of calculating a solution of the discretization equation,

wherein the two operations include deformation of the advective term into a conservation form, and a term of correcting an error in the conservation form of the advective term.

(7) Further, according to still another aspect of the present invention, there is provided a program for functioning a computer as: a velocity field acquisition unit which acquires a velocity field; and a solution calculation unit which applies the velocity field acquired by the velocity field acquisition unit to a discretization equation obtained by adding at least two operations to the equation including the advective term, and calculates a solution of the discretization equation, wherein the two operations include deformation of the advective term into a conservation form, and a term of correcting an error in the conservation form of the advective term.

(8) Further, according to still another aspect of the present invention, there is provided a simulation device estimating a generation source of a diffusion substance which estimates generation source information of fluid on the basis of information from a plurality of observers, including: an observation information obtaining section which obtains position information of the observer and measured concentration information; a virtual ejection spot setting section which sets a plurality of virtual ejection spots in a region which predetermines estimation of a concentration of the diffusion substance; and the above-mentioned device estimating the concentration of the diffusion substance in the virtual ejection spot on the basis of the position information of the observer, the measured concentration information, and information of the virtual ejection spot.

(9) Further, according to still another aspect of the present invention, there is provided a simulation method estimating a generation source of a diffusion substance which estimates generation source information of fluid on the basis of information from a plurality of observers, the method including: obtaining position information of the observer and measured concentration information; setting a plurality of virtual ejection spots in a region which predetermines estimation of a concentration of the diffusion substance; and estimating the concentration of the diffusion substance in the virtual ejection spot by the above-mentioned method on the basis of the position information of the observer, the measured concentration information, and information of the virtual ejection spot.

ADVANTAGEOUS EFFECTS OF THE INVENTION

According to the invention, it is possible to obtain a preferred simulation result.

BRIEF DESCRIPTION OF THE DRAWINGS

Fig. 1 is a diagram illustrating a control volume of a simple simulation example.
Fig. 2 is a diagram illustrating a value of a continuity equation of a simple simulation example.
Fig. 3 is a diagram illustrating a simple simulation example by using a method of the related art.
Fig. 4 is a diagram illustrating a simple simulation example of the present invention.
Fig. 5 is a schematic block diagram illustrating a configuration of a fluid simulation device 10 according to a first embodiment of the invention.
Fig. 6 is a conceptual diagram illustrating a cell of the embodiment.
Fig. 7 is a diagram illustrating an example of cell information stored in a cell configuration memory unit 102 of the embodiment.
Fig. 8 is a diagram illustrating an example of information between cells stored in the cell configuration memory unit 102 of the embodiment.
Fig. 9 is a diagram illustrating an example of velocity field information stored in a velocity field memory unit 104 of the embodiment.
Fig. 10 is a diagram illustrating an example of pressure field information stored in a pressure field memory unit 107 of the embodiment.
Fig. 11 is a flowchart illustrating an operation of the fluid simulation device 10 of the embodiment.
Fig. 12 is a schematic block diagram illustrating a configuration of a fluid simulation device 10a according to a second embodiment of the invention.
Fig. 13 is a schematic block diagram illustrating a configuration of a continuum simulation device 10b according to a third embodiment of the invention.
Fig. 14 is a schematic block diagram illustrating a configuration of a continuum simulation device 10c according to a fourth embodiment of the invention.
Fig. 15 is a contour diagram illustrating a velocity field of a simulation target.
Fig. 16 is a contour diagram illustrating the size of a divergence of a velocity in the velocity field of the simulation target.
Fig. 17 is a contour diagram illustrating an example when a temperature distribution is calculated by using a method of the related art.

Fig. 18 is a contour diagram illustrating an example when a temperature distribution is calculated by using the present invention.

Fig. 19 is a diagram illustrating an Eulerian coordinate system and a Lagrangian coordinate system.

Fig. 20 is a diagram illustrating each parameter of one-dimensional flow.

MODES FOR CARRYING OUT THE INVENTION

Before describing each embodiment, the present invention will be schematically described. First, a case where a density ρ of a continuum is constant will be described. As described above, in the related art, when Transport Equations (2-1) and (2-2) are deformed into Expression (2-5) of the conservation form, Continuity Equation (3-1) denoted by Expression (2-3) is used.

[Formula 23]

$$\frac{\partial u_i}{\partial x_i} = 0 \quad \cdots (3-1)$$

However, as described above, a velocity obtained by a simulation or measurement includes an error, and thus Expression (3-1) is not completely satisfied, and a right member is not zero. Therefore, here, by using Expression (3-2) in which the right member of Expression (3-1) is substituted from zero to D, a transport equation of a conservation form is derived. That is, a continuity equation is not completely satisfied, and on the premise that the right member of Expression (3-1) is not zero, the transport equation of the conservation form is derived.

[Formula 24]

$$\frac{\partial u_i}{\partial x_i} = D \quad \cdots (3-2)$$

First, when $+\phi \cdot D - \phi \cdot D$ is inserted between a second term and a third term of a left member of Transport Equation (2-2), Expression (3-3) is obtained. Next, when Expression (3-2) is assigned to D of the third term of the left member of Expression (3-3), Expression (3-4) is obtained. The second term and the third term of the left member of Expression (3-4) is identical to Expression (2-4), and thus when the same deformation is performed, Expression (3-5) is obtained.

[Formula 25]

$$\frac{\partial \phi}{\partial t} + u_j \frac{\partial \phi}{\partial x_j} + \phi \cdot D - \phi \cdot D + F(\phi) = 0 \quad \cdots (3-3)$$

$$\frac{\partial \phi}{\partial t} + u_j \frac{\partial \phi}{\partial x_j} + \phi \cdot \frac{\partial \phi}{\partial x_j} - \phi \cdot D + F(\phi) = 0 \quad \cdots (3-4)$$

$$\frac{\partial \phi}{\partial t} + \frac{\partial u_j \phi}{\partial x_j} - \phi \cdot D + F(\phi) = 0 \quad \cdots (3-5)$$

In the present invention, when the density ρ is constant, Expression (3-5) is used as the transport equation of the conservation form. That is, in the present invention, a solution of Expression (3-5) is calculated. Furthermore, Expression (3-5) is identical to Transport Equation (2-5) of the conservation form of the related art except for including the third term ($-\phi \cdot D$) of the left member. By including the third term of the left member, Expression (3-5) is a transport equation of a conservation form in which the right member of the continuity equation is not zero as shown in Expression (3-2) premised on a fact that an error D is included. In a simulation using Expression (3-5), a pseudo source/sink as shown in Expression (2-24) is able to be corrected by $-\phi \cdot D$. That is, it is possible to prevent the pseudo source/sink from appearing.

As an example of the simulation using Expression (3-5), a case where Expression (3-5) is discretized by a finite volume method and is simulated will be described. Furthermore, hereinafter, the case where Expression (3-5) is discretized by the finite volume method will be described, and other discretization methods may be used insofar as the method is a method discretizing an equation having an advective term of a conservation form such as a difference method.

First, similar to a case where Expression (2-11) is derived, when Expression (3-5) is integrated with respect to a volume V of a control volume, Expression (3-6) is obtained. Each symbol of Expression (3-6) is identical to that of Expression (2-11). In addition, similarly, when Expression (3-2) is integrated with respect to the volume V of the control volume, Expression (3-7) is obtained.

[Formula 26]

$$\int_V \frac{\partial \phi}{\partial t} dV + \int_S (\boldsymbol{n} \cdot \boldsymbol{u}) \, \phi \, dS - \int_V \phi \cdot D \, dV + \int_V F(\phi) dV = 0 \quad \cdots (3-6)$$

$$\int_S (\boldsymbol{n} \cdot \boldsymbol{u}) \, dS = \int_V D \, dV \quad \cdots (3-7)$$

Similar to a case where Expressions (2-13) and (2-14) are derived, when Expressions (3-6) and (3-7) are discretized with respect to a control volume a having m boundary surfaces $E_{ab}$ (b is 1 to m), the following Expression (3-8) and Expression (3-9) are obtained.

[Formula 27]

$$V_a \frac{\partial \phi_a}{\partial t} + \sum_{b=1}^{m} \left[ S_{ab} \cdot (\boldsymbol{n}_{ab} \cdot \boldsymbol{u}_{ab}) \cdot \phi_{ab} \right] - V_a \cdot \phi_a \cdot D_a + \left[ \text{Discretization Term of } F(\phi) \right] = 0$$
$$\cdots (3-8)$$

$$\sum_{b=1}^{m} \left[ S_{ab} \cdot (\boldsymbol{n}_{ab} \cdot \boldsymbol{u}_{ab}) \right] = V_a \cdot D_a \quad \cdots (3-9)$$

Further, when Expression (3-9) is assigned to Expression (3-8), Expression (3-10) is obtained. By solving discretized Transport Equation (3-10), a preferred simulation result is able to be obtained.

[Formula 28]

$$V_a \frac{\partial \phi_a}{\partial t} + \sum_{b=1}^{m} \left[ S_{ab} \cdot (\boldsymbol{n}_{ab} \cdot \boldsymbol{u}_{ab}) \cdot \phi_{ab} \right] - \phi_a \cdot \sum_{b=1}^{m} \left[ S_{ab} \cdot (\boldsymbol{n}_{ab} \cdot \boldsymbol{u}_{ab}) \right] + \left[ \text{Discretization Term of } F(\phi) \right] = 0$$
$$\cdots (3-10)$$

Next, a case where the density ρ of the continuum is not constant will be described. When the density ρ is not constant, similar to a case where the density ρ is constant, a transport equation of a conservation form is derived by using Expression (3-11) in which a right member of a continuity equation when the density ρ is not constant is D.

[Formula 29]

$$\frac{\partial \rho}{\partial t} + \frac{\partial \rho u_i}{\partial x_i} = D \quad \cdots (3-11)$$

When $+\phi \cdot D - \phi \cdot D$ is inserted between the first term and the second term of the left member of Transport Equation (2-7) when the density ρ is not constant, Expression (3-12) is obtained. Next, when Expression (3-11) is assigned to D of a third term of a left member of Expression (3-12), Expression (3-13) is obtained. A first term and a second term of a left member of Expression (3-13) are identical to that of Expression (2-9), and thus when the same deformation is performed, Expression (3-14) is obtained.

[Formula 30]

$$\rho \left( \frac{\partial \phi}{\partial t} + u_j \frac{\partial \phi}{\partial x_j} \right) + \phi \cdot D - \phi \cdot D + \rho F\left( \phi \right) = 0 \quad \cdots (3-12)$$

$$\rho \left( \frac{\partial \phi}{\partial t} + u_j \frac{\partial \phi}{\partial x_j} \right) + \phi \cdot \left( \frac{\partial \rho}{\partial t} + \frac{\partial \rho u_i}{\partial x_i} \right) - \phi \cdot D + \rho F\left( \phi \right) = 0 \quad \cdots (3-13)$$

$$\frac{\partial \rho \phi}{\partial t} + \frac{\partial u_j \rho \phi}{\partial x_j} - \phi \cdot D + \rho F\left( \phi \right) = 0 \quad \cdots (3-14)$$

In the present invention, when the density $\rho$ is not constant, Expression (3-14) is used as a transport equation of a conservation form. That is, a solution of Expression (3-14) is calculated. Furthermore, Expression (3-14) is identical to Transport Equation (2-10) of the conservation form of the related art except for including the third term (-$\phi \cdot$ D) of the left member. By including the third term of the left member, Expression (3-14) is a transport equation of a conservation form in which the right member of the continuity equation is not zero as illustrated in Expression (3-11) premised on a fact that the error D is included. In a simulation using Expression (3-14), a pseudo source/sink as shown in Expression (2-24) is able to be corrected by -$\phi \cdot$ D. That is, even when the density $\rho$ is not constant, it is possible to prevent the pseudo source/sink from appearing.

Next, as an example of the simulation using Expression (3-14), similar to the case where the density $\rho$ is constant, a case where Expression (3-14) is discretized by a finite volume method and is simulated will be described. Similar to a case where Expression (2-11) is derived, when Expression (3-14) is integrated with respect to the volume V of the control volume, Expression (3-15) is obtained. Each symbol of Expression (3-15) is identical to that of Expression (2-11). In addition, when Expression (3-11) is similarly integrated with respect to the volume V of the control volume, Expression (3-16) is obtained.
[Formula 31]

$$\int_V \frac{\partial \rho \phi}{\partial t} dV + \int_S (\boldsymbol{n} \cdot \boldsymbol{u}) \rho \phi \, dS - \int_V \phi \cdot D \, dV + \int_V \rho F\left( \phi \right) dV = 0 \quad \cdots (3 \quad 1 \, 5)$$

$$\int_V \frac{\partial \rho}{\partial t} + \int_S (\boldsymbol{n} \cdot \boldsymbol{u}) \rho dS = \int_V D dV \quad \cdots (3-16)$$

Similar to a case where Expressions (3-8) and (3-9) are derived, when Expressions (3-15) and (3-16) are discretized with respect to the control volume a having the m boundary surfaces $E_{ab}$ (b is 1 to m), the following Expression (3-17) and Expression (3-18) are obtained.
[Formula 32]

$$V_a \cdot \frac{\partial \rho_a \phi_a}{\partial t} + \sum_{b=1}^m \left[ S_{ab} \cdot (\boldsymbol{n}_{ab} \cdot \boldsymbol{u}_{ab}) \cdot \rho_{ab} \cdot \phi_{ab} \right] - V_a \cdot \phi_a \cdot D_a + \left[ \text{Discretization Term of } \rho F\left( \phi \right) \right] = 0$$

$$\cdots (3-17)$$

$$V_a \cdot \frac{\partial \rho_a}{\partial t} + \sum_{b=1}^m [S_{ab} \cdot (\boldsymbol{n}_{ab} \cdot \boldsymbol{u}_{ab}) \cdot \rho_{ab}] = V_a \cdot D_a \quad \cdots (3-18)$$

Further, when Expression (3-18) is assigned to Expression (3-17), Expression (3-19) is obtained.
[Formula 33]

$$V_a \cdot \frac{\partial \rho_a \phi_a}{\partial t} + \sum_{b=1}^{m} \left[ S_{ab} \cdot (n_{ab} \cdot u_{ab}) \cdot \rho_{ab} \cdot \phi_{ab} \right]$$

$$- \phi_a \cdot \left\{ V_a \cdot \frac{\partial \rho_a}{\partial t} + \sum_{b=1}^{m} [S_{ab} \cdot (n_{ab} \cdot u_{ab}) \cdot \rho_{ab}] \right\} + \left[ \text{Discretization Term of } \rho F(\phi) \right] = 0$$

$$\cdots (3-19)$$

Here, Expression (3-19) becomes Expression (3-21) from Expression (3-20). By solving discretized Transport Equation (3-21), even when the density $\rho$ is not constant, a preferred simulation result is able to be obtained.
[Formula 34]

$$V_a \cdot \frac{\partial \rho_a \phi_a}{\partial t} - \phi_a \cdot V_a \cdot \frac{\partial \rho_a}{\partial t} = V_a \cdot \left( \phi_a \cdot \frac{\partial \rho_a}{\partial t} - \rho_a \cdot \frac{\partial \phi_a}{\partial t} \right) - \phi_a \cdot V_a \cdot \frac{\partial \rho_a}{\partial t}$$

$$= \rho_a \cdot V_a \cdot \frac{\partial \phi_a}{\partial t} \quad \cdots (3-20)$$

$$\rho_a \cdot V_a \cdot \frac{\partial \phi_a}{\partial t} + \sum_{b=1}^{m} \left[ S_{ab} \cdot (n_{ab} \cdot u_{ab}) \cdot \rho_{ab} \cdot \phi_{ab} \right] - \phi_a \cdot \sum_{b=1}^{m} [S_{ab} \cdot (n_{ab} \cdot u_{ab}) \cdot \rho_{ab}]$$

$$+ \left[ \text{Discretization Term of } \rho F(\phi) \right] = 0 \cdots (3-21)$$

Then, when each of Expressions (3-10) and (3-21) is deformed, the following Expressions (3-22) and (3-23) are obtained.
[Formula 35]

$$V_a \frac{\partial \phi_a}{\partial t} + \sum_{b=1}^{m} \left[ S_{ab} \cdot (n_{ab} \cdot u_{ab}) \cdot \left( \phi_{ab} - \phi_a \right) \right] + \left[ \text{Discretization Term of } F(\phi) \right] = 0$$

$$\cdots (3-22)$$

$$\rho_a \cdot V_a \cdot \frac{\partial \phi_a}{\partial t} + \sum_{b=1}^{m} \left[ S_{ab} \cdot (n_{ab} \cdot u_{ab}) \cdot \rho_{ab} \cdot \left( \phi_{ab} - \phi_a \right) \right] + \left[ \text{Discretization Term of } \rho F(\phi) \right] = 0$$

$$\cdots (3-23)$$

It is focused on $(\phi_{ab} - \phi_a)$ in $\Sigma$ of a second term of a left member in each of Expressions (3-22) and (3-23). $\phi_{ab}$ is a value of $\phi$ in the boundary surface $E_{ab}$ of control volumes a and b. $\phi_{ab}$ is calculated by interpolation using $\phi_a$ and $\phi_b$. That is, $\phi_{ab}$ is able to be denoted by Expression (3-24). Here, $x_a$ and $x_b$ are coordinates vectors of control points $C_a$ and $C_b$ which are representative points of the respective control volumes a and b.
[Formula 33]

$$\phi_{ab} = \phi_{ab} \left( \phi_a, \phi_b, x_a, x_b, V_a, V_b, S_{ab}, n_{ab}, \cdots \right) \quad \cdots (3-24)$$

As an interpolation function for calculating $\phi_{ab}$, various functions are known from the related art. The interpolation function (also referred to as a scheme) is determined according to an object of the simulation, the type of continuum which is a target, a numerical value calculation method, and the like, and any function may be used. Here, some representative schemes will be described.

(1) Primary Upwind Scheme

A primary upwind scheme is a scheme which is usually used when fluid is a target. As an interpolation function

for deriving $\phi_{ab}$, the following Expressions (3-25) and (3-26) are used. A unit normal vector $n_{ab}$ is an outward vector with respect to the control volume a, and thus Expression (3-25) is an interpolation function at the time of inflow with respect to the control volume a, and Expression (3-26) is an interpolation function at the time of outflow with respect to the control volume a.

[Formula 37]

$$\phi_{ab} = \phi_b \; ; \; \boldsymbol{n}_{ab} \cdot \boldsymbol{u}_{ab} \leqq 0 \quad \cdot \cdot \cdot (3-25)$$

$$\phi_{ab} = \phi_a \; ; \; \boldsymbol{n}_{ab} \cdot \boldsymbol{u}_{ab} > 0 \quad \cdot \cdot \cdot (3-26)$$

When the interpolation functions as assigned to ($\phi_{ab}$ - $\phi_a$) of Expressions (3-22) and (3-23), the following Expressions (3-27) and (3-28) are obtained.
[Formula 38]

$$\phi_{ab} - \phi_a = \phi_b - \phi_a \; ; \; \boldsymbol{n}_{ab} \cdot \boldsymbol{u}_{ab} \leqq 0 \quad \cdot \cdot \cdot (3-27)$$

$$\phi_{ab} - \phi_a = \phi_a - \phi_a = 0 \; ; \; \boldsymbol{n}_{ab} \cdot \boldsymbol{u}_{ab} > 0 \quad \cdot \cdot \cdot (3-28)$$

Accordingly, among sigmas of Expressions (3-22) and (3-23), an item of an outflowing boundary surface becomes 0. Therefore, when a summation with respect to an inflowing boundary surface is shown as Expression (3-29), Expressions (3-22) and (3-23) become Expressions (3-30) and (3-31).
[Formula 39]

$$\tilde{\Sigma}_{b=1}^{m}[\quad] \quad \cdot \cdot \cdot (3-29)$$

$$V_a \frac{\partial \phi_a}{\partial t} + \tilde{\Sigma}_{b=1}^{m}\left[S_{ab} \cdot (\boldsymbol{n}_{ab} \cdot \boldsymbol{u}_{ab}) \cdot \left(\phi_b - \phi_a\right)\right] + \left[\text{Discretization Term of } F(\phi)\right] = 0$$
$$\cdot \cdot \cdot (3-30)$$

$$\rho_a \cdot V_a \cdot \frac{\partial \phi_a}{\partial t} + \tilde{\Sigma}_{b=1}^{m}\left[S_{ab} \cdot (\boldsymbol{n}_{ab} \cdot \boldsymbol{u}_{ab}) \cdot \rho_{ab} \cdot \left(\phi_b - \phi_a\right)\right] + \left[\text{Discretization Term of } \rho F(\phi)\right] = 0$$
$$\cdot \cdot \cdot (3-31)$$

Tilde attached sigmas of Expressions (3-30) and (3-31) are equations indicating that $\phi_a$ outflows at the same flow rate as a flow rate $S_{ab} \cdot (n_{ab} \cdot Uab)$ of the continuum when $\phi_b$ inflows from the control volume b which is adjacent to the control volume a. That is, the Tilde attached sigmas are balance equations of an inflow rate/an outflow rate with respect to the control volume a. This is an example exhibiting effectivity of the present invention.

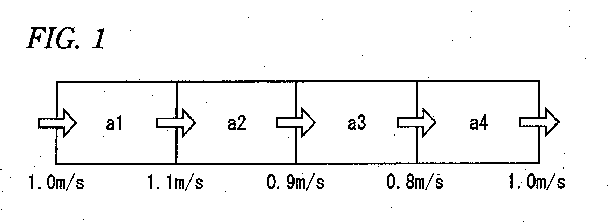

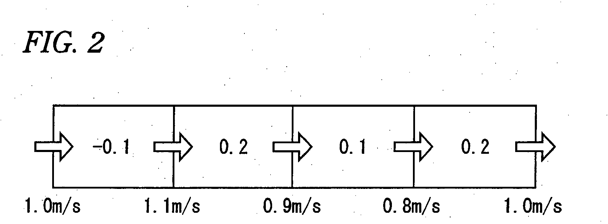

A simple simulation example when the primary upwind scheme is used will be described. In the one-dimensional flow, the density is constant. As illustrated in Fig. 1, the control volume is divided into four control volumes a1, a2, a3, and a4 in a flow direction. A velocity of each boundary surface becomes 1.0, 1. 1, 0.9, 0.8, and 1.0 in order from a boundary surface on an upstream side of the control volume a1. When a volume of each of the control volumes is 1, the boundary surface is 1, and a velocity distribution is assigned to the continuity equation in each of the control volumes, the velocity becomes -0.1, 0.2, 0.1, and -0.2 in order from the control volume a1 as illustrated in Fig. 2, and none of the velocities is 0.

Expression (3-30) in which F ($\phi$) = 0 for the sake of simplicity approximates to a time derivation by a primary difference, and when Δt = 1, Expression (3-30') is obtained.

$$\phi_i + u_i (\phi_{i-1} - \phi_i) = (1 - u_i) \phi_a + u_i\phi_{i-1} = \phi_i' \ ...(3\text{-}30')$$

Here, $u_i$ is a velocity of a boundary surface with respect to a control volume $a_{i-1}$ on an upstream side of a control volume $a_i$, $\phi_i$ is a physical value (a temperature) of the control volume $a_i$, $\phi_i'$ is a physical value of the control volume in a previous time step, and $\phi_{i-1}$ is a physical value of the control volume $a_{i-1}$ on the upstream side.

In contrast, in the related art, when the same conditions are applied to Expression (2-20), Expression (2-20') is obtained.

$$\phi_i + u_i \cdot \phi_{i-1} - u_{i+1} \cdot \phi_i = (1 - u_{i+1}) \phi_i + u_i \cdot \phi_{i-1} = \phi_i' \ ...(2\text{-}20')$$

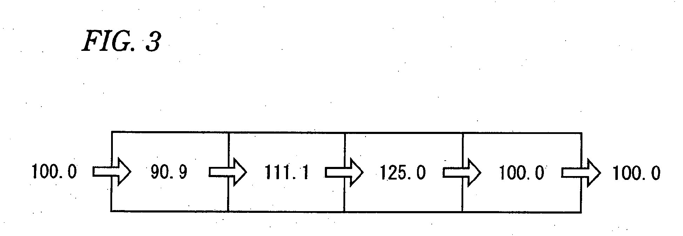

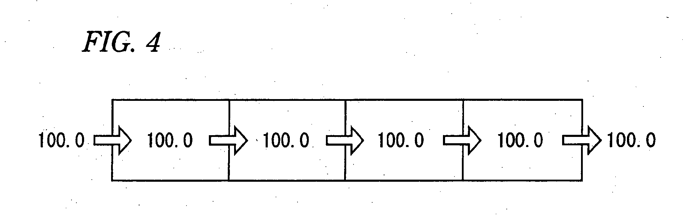

Here, as initial conditions, a temperature of the entire control volume is 100°C, that is, $\phi_i'$ = 100°C (i = 1 to 4), and a temperature of each of the control volumes in a next time step is calculated by using Expressions (2-20') and (3-30'). A case where Expression (2-20') is used, that is, a case where a calculation result example of the related art is illustrated in Fig. 3, and a case where Expression (3-30') is used, that is, a case where a calculation result example of the present invention is illustrated in Fig. 4. Thus, in a normal situation, the temperatures are uniformly 100°C, and thus calculation results are supposed to be uniformly 100°C, but in the related art, the temperatures are not in an uniform distribution, and in the calculation result example of the present invention, the temperatures are uniformly 100°C.

(2) Secondary Upwind Scheme and Tertiary Upwind Scheme

A secondary upwind scheme and a tertiary upwind scheme are schemes which are also usually used in fluid calculation. The detail description of these schemes is omitted herein, and $\phi_{ab}$ becomes Expression (3-32). That is, an interpolation function using grad (a gradient vector) of $\phi_a$ and $\phi_b$ is used.
[Formula 30]

$$\phi_{ab} = \phi_{ab}\left( \phi_a, \phi_b, grad\ \phi_a, grad\ \phi_b, x_a, x_b, V_a, V_b, S_{ab}, n_{ab}, \cdots \right) \quad \cdots (3\text{-}3\,2)$$

Unlike the upwind scheme of (1), the advective term does not simply become zero when the fluid outflows, as shown in Expression (3-28). Therefore, terms of sigmas in Expressions (3-22) and (3-23) become a summation of advective terms relevant to the entire control volume b which is adjacent to the control volume a.

(3) Other Schemes

Other than the primary upwind scheme, the secondary upwind scheme, and the tertiary upwind scheme, a scheme using a non-linear function such as an index function $e^x$ is used. In addition, from the same point of view as that of a center difference, Expression (3-33) may be used in solid, slowly flowing fluid, or the like.
[Formula 41]

$$\phi_{ab} = \frac{\phi_a + \phi_b}{2} \quad \cdots (3\text{-}3\,3)$$

As described above, examples of some schemes for deriving $\phi_{ab}$ are described, and even when any scheme is used and even when the velocity of the movement and the deformation of the continuum does not satisfy the continuity equation and has an error, a preferred simulation result is able to be obtained.

[First Embodiment]

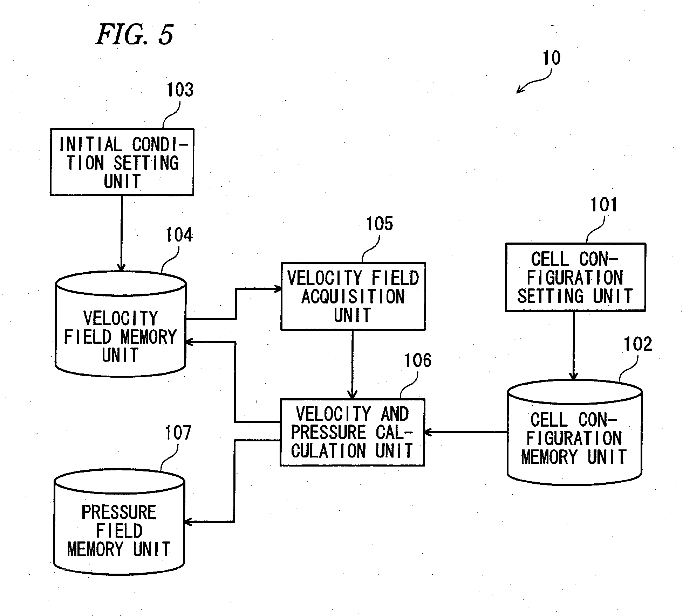

Hereinafter, a first embodiment of the present invention will be described with reference to the drawings. Fig. 5 is a schematic block diagram illustrating a configuration of a fluid simulation device 10 according to the first embodiment of the invention. The fluid simulation device 10 of this embodiment is a simulation device which simulates incompressible fluid by a finite volume method, and calculates a velocity and a pressure in a simulation region. That is, in this embodiment, a simulation device calculating a solution of a Navier-Stokes equation which is a transport equation relevant to a momentum will be described.

As illustrated in Fig. 5, the fluid simulation device 10 includes a cell configuration setting unit 101, a cell configuration memory unit 102, an initial condition setting unit 103, a velocity field memory unit 104, a velocity field acquisition unit 105, a velocity and pressure calculation unit 106, and a pressure field memory unit 107. The cell configuration setting unit 101 sets information relevant to cells into which the simulation region (a space) is divided, and stores the information in the cell configuration memory unit 102. The cell configuration memory unit 102 stores the information relevant to the cell which is set by the cell configuration setting unit 101. Furthermore, the information relevant to the cell includes cell information which is information of each cell, and intercell information which is information between adjacent cells.

The initial condition setting unit 103 sets a velocity vector of each of the cells as initial conditions, and stores the velocity vector in the velocity field memory unit 104. The velocity field memory unit 104 stores the velocity vector of each of the cells which is set by the initial condition setting unit 103. In addition, the velocity field memory unit 104 also stores a velocity vector of each of the cells which is calculated by the velocity and pressure calculation unit 106 in each time step. When the velocity and pressure calculation unit 106 calculates a solution relevant to a time step n, the velocity field acquisition unit 105 reads out a velocity vector of each of the cells in a time step n-1 from the velocity field memory unit 104.

The velocity and pressure calculation unit 106 calculates the velocity vector of each of the cells in the time step n-1 which is read from the velocity field memory unit 104 by the velocity field acquisition unit 105, and a velocity vector and a pressure of each of the cell in a target time step n by using the cell information stored in the cell configuration memory unit 102. The velocity and pressure calculation unit 106 stores the calculated velocity vector of each of the cells in the velocity field memory unit 104, and stores the calculated pressure in the pressure field memory unit 107. Furthermore, when the velocity vector and the pressure are calculated, the velocity and pressure calculation unit 106 uses a discretization equation in which the Navier-Stokes equation of the incompressible fluid and a continuity equation (referred to as an equation for mass conservation) of the incompressible fluid are discretized. The discretization equation of the Navier-Stokes equation of the incompressible fluid in this embodiment performs an operation including deformation of the advective term into a conservation form described later, and a term of correcting an error in the conservation form of the advective term with respect to the Navier-Stokes equation of the incompressible fluid. The detailed description thereof will be described later. The pressure field memory unit 107 stores the pressure of each of the cells which is calculated by the velocity and pressure calculation unit 106 in each time step.

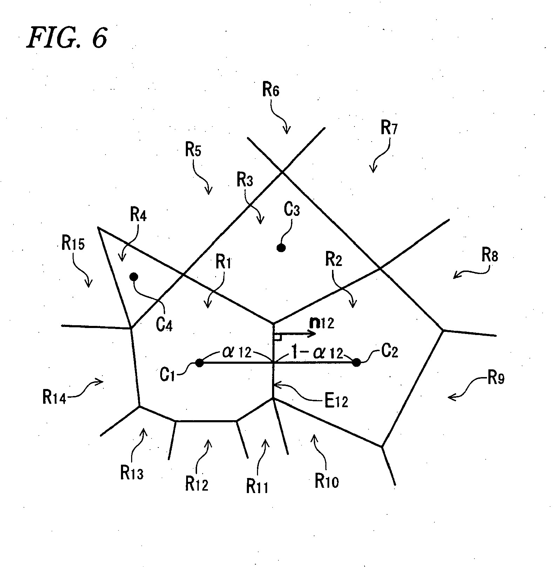

Fig. 6 is a conceptual diagram illustrating the cell of this embodiment. In Fig. 6, regions indicated by symbols $R_1$ to $R_{15}$ are 1st to 15th cells, respectively. As illustrated in Fig. 6, each of the cells is in the shape of a polyhedron. In addition, the cells are arranged to fill the simulation regions without a gap. In the same drawing, each representative point $C_n$ (n = 1 to 4) is a representative point of an n-th cell $R_n$. In addition, a boundary surface $E_{12}$ is a boundary surface between the cells $R_1$ and $R_2$. A unit normal vector $n_{12}$ is a unit normal vector of the boundary surface $E_{12}$. A distance $\alpha_{12}$ is a distance from an intersection between a line connecting points $C_1$ and $C_2$ and the boundary surface $E_{12}$ to the representative point $C_1$ when a distance from the representative point $C_1$ to the representative point $C_2$ is 1.

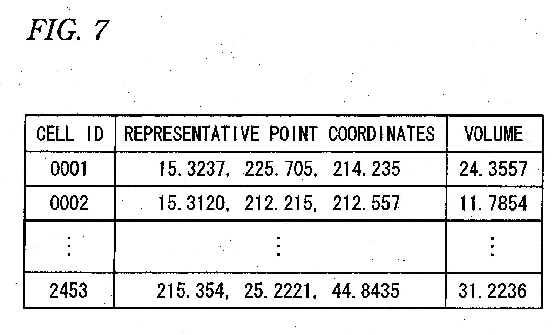

Fig. 7 is a diagram illustrating an example of the cell information stored in the cell configuration memory unit 102. As illustrated in Fig. 7, the cell information includes cell IDs of all of the cells, representative point coordinates, and the volume. In the example illustrated in Fig. 7, the cell information of the cell of which the cell ID is "0001" is the cell ID of "0001", the representative point coordinates of "15, 225, 214", and the volume of "24.3". Similarly; the cell information of the cell of which the cell ID is "0002" is the cell ID of "0002", the representative point coordinates of "15, 225, 214", and the volume of "24.3", and the cell information of the cell of which the cell ID is "2453" is the cell ID of "2453", the representative point coordinates of "215, 25, 44", and the volume of "31.2". Furthermore, in this embodiment, three numerical values of the representative point coordinates are an x coordinate, a y coordinate, and a z coordinate. Hereinafter, $X_n$ indicates the representative point coordinates of the cell of which the cell ID is n, and $V_n$ indicates the volume of the cell of which the cell ID is n.

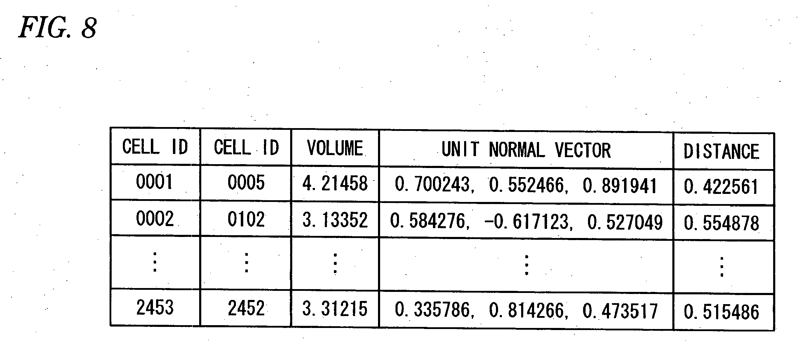

Fig. 8 is a diagram illustrating an example of the intercell information stored in the cell configuration memory unit 102. As illustrated in Fig. 8, the intercell information includes a cell ID of a reference cell, a cell ID of a cell which is adjacent to the cell, an area of a boundary surface between these two cells, a unit normal vector of the boundary surface, and a distance $\alpha$ from an intersection between a straight line through representative points of these two cells and the boundary surface to a representative point of the reference cell. Furthermore, the unit normal vector is a unit vector having a length of "1". In addition, the distance is a distance when a distance between the representative points of the two cells is "1", and corresponds to $\alpha_{12}$ of Fig. 6.

In the example illustrated in Fig. 8, the intercell information relevant to the intercell between the cell of which the cell ID is "0001" and the cell of which the cell ID is "0005" is the cell ID of "0001", the cell ID of "0005", the area of "4.21458", the unit normal vector of "0.700243, 0.552466, 0.891941", and the distance of "0.422561". Similarly, the intercell information relevant to the intercell between the cell of which the cell ID is "0001" and the cell of which the cell ID is "0102" is the cell ID of "0001", the cell ID of "0102", the area of "3.13352", the unit normal vector of "0.584276, -0.617123, 0.527049", and the distance of "0.554878", and the intercell information relevant to the intercell between the cell of which the cell ID is "2453" and the cell of which the cell ID is "2452" is the cell ID of "2453", the cell ID of "2452", the area of "3.31215", the unit normal vector of "0.335786, 0.814266, 0.473517", and the distance of "0.515486".

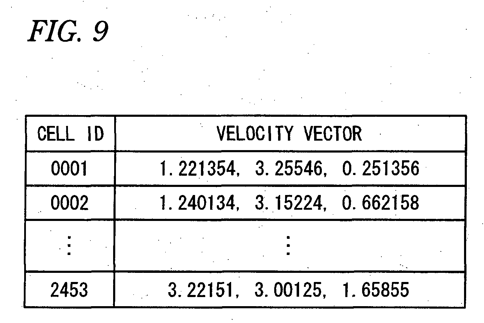

Fig. 9 is a diagram illustrating an example of the velocity field information stored in the velocity field memory unit 104. The velocity field memory unit 104 stores velocity field information in an initial time step which is set as initial conditions, and velocity field information in each time step which is calculated by the velocity and pressure calculation unit 106. The example illustrated in Fig. 9 is the velocity field information in one time step. The velocity field information in one time step includes the cell ID of each cell and the velocity vector of each cell. The example of the velocity field information illustrated in Fig. 9 includes the cell ID of "0001" and the velocity vector of the cell of "1.221354, 3.25546, 0.251356", the cell ID of "0002" and the velocity vector of the cell of "1.240134, 3.15224, 0.662158", and the cell ID of "2453" and the velocity vector of the cell of "3.22151, 3.00125, 1.65855".

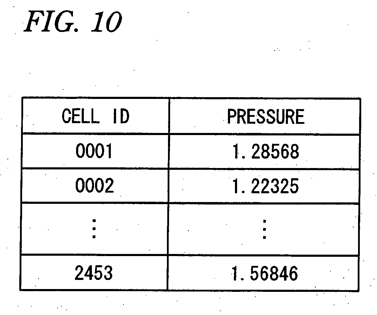

Fig. 10 is a diagram illustrating an example of the pressure field information stored in the pressure field memory unit 107. The pressure field memory unit 107 stores pressure field information in each time step which is calculated by the velocity and pressure calculation unit 106. The example illustrated in Fig. 10 is the pressure field information in one time step. The pressure field information in one time step includes the cell ID of each cell and the pressure of each cell. The example of the pressure field information illustrated in Fig. 10 includes the cell ID of "0001" and the pressure of the cell of "1.28568", the cell ID of "0002" and the pressure of the cell of "1.22325", and the cell ID of "2453" and the pressure of the cell of "1.56846".

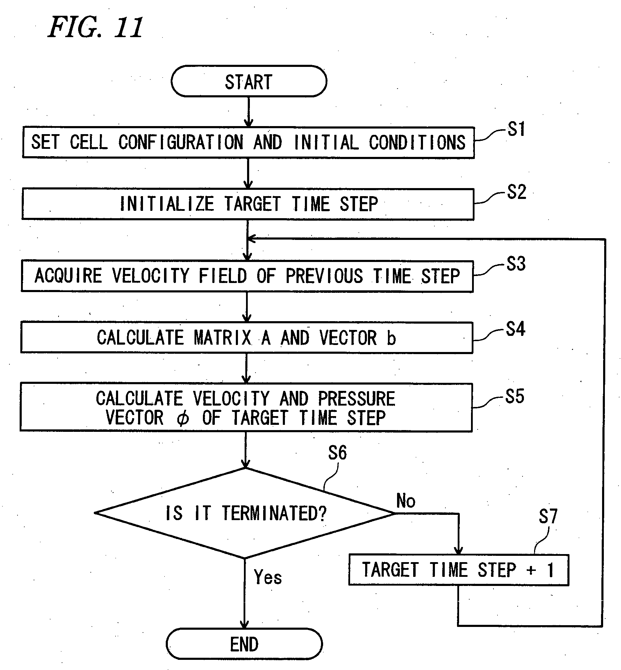

Fig. 11 is a flowchart illustrating an operation of the fluid simulation device 10 of this embodiment. First, the cell configuration setting unit 101 stores the information (the cell information and the intercell information) relevant to the cell which is acquired from the outside in the cell configuration memory unit 102. In addition, the initial condition setting unit 103 stores the velocity field information of the initial time step set as the initial conditions which is acquired from the outside in the velocity field memory unit 104 (S1). Next, the velocity field acquisition unit 105 sets the target time step to an initial value of "1" (S2). Next, the velocity field acquisition unit 105 acquires the velocity field information of a step which is one step before the target time step from the velocity field memory unit 104 (S3). Furthermore, the velocity field acquisition unit 105 sets the initial time step to be the step which is one step before the target time step when the target time step is "1", and acquires the velocity field information of the initial time step from the velocity field memory unit 104.

Next, the velocity and pressure calculation unit 106 calculates a matrix A and a vector b when A · φ = b in a linear simultaneous equation including an equation in which the Navier-Stokes equation of the incompressible fluid is discretized and an equation in which the continuity equation of the incompressible fluid is discretized (S4). The velocity and pressure calculation unit 106 calculates each element of the matrix A and the vector b by using the velocity field information which is acquired by the velocity field acquisition unit 105 in Step S3.

Furthermore, the vector φ is a vector having each element of the velocity vector and the pressure of all of the cells in the target time step as an element. That is, the vector φ has the number of cells x 4 elements. On the other hand, the linear simultaneous equation includes an equation in which a Navier-Stokes equation in each axis direction which is relevant to each of the cells is discretized, and an equation in which the continuity equation of the incompressible fluid which is relevant to each of the cells is discretized. That is, the linear simultaneous equation includes the same number of equations as the number of elements of the vector φ, and thus the solution is able to be calculated. Furthermore, a method of calculating the matrix A and the vector b in Step S4 will be described later in detail.

Next, the velocity and pressure calculation unit 106 calculates the vector φ which is the solution of A · φ = b. A • φ = b is a linear simultaneous equation having each of the elements of the vector φ as a unknown, and thus the velocity and pressure calculation unit 106 uses, for example, a solution method of a known linear simultaneous equation such as a conjugate gradient method for calculating the vector φ. The velocity and pressure calculation unit 106 stores the velocity vector among the calculated elements of the vector φ in the velocity field memory unit 104 as the velocity vector of the target time step. Similarly, the velocity and pressure calculation unit 106 stores the pressure among the calculated elements of the vector φ in the pressure field memory unit 107 as the pressure of the target time step (S5).

Next, the velocity and pressure calculation unit 106 determines whether or not termination conditions are satisfied (S6). As the termination conditions, for example, a condition in which the target time step is identical to a value which is set in advance, and the like are included. When it is determined that the termination conditions are not satisfied (S6-No), the velocity and pressure calculation unit 106 proceeds to Step S7 and increases the target time step by "1" (S7), and returns to Step S3. Accordingly, the processing is performed with respect to the next time step. In addition, in Step S6, when it is determined that the termination conditions are satisfied (S6-Yes), the processing is terminated.

Next, the calculation processing of the matrix A and the vector b by using the velocity and pressure calculation unit 106, that is, Step S4 of Fig. 11 will be described in detail. As described above, A · φ = b is the linear simultaneous equation including the equation in which the Navier-Stokes equation of the incompressible fluid is discretized and the equation in which the continuity equation of the incompressible fluid is discretized. In general, the Navier-Stokes equation of the incompressible fluid in an i-th axis direction is denoted as Expression (4-1). In addition, In general, the continuity equation of the incompressible fluid is denoted as Expression (4-2). Furthermore, in this embodiment, an orthogonal coordinate system (a Cartesian coordinate system) is used as a coordinate system. In addition, in each following equation including Expressions (4-1) and (4-2), an Einstein summation law is used.

[Formula 42]

$$\frac{\partial u_i}{\partial t} + u_j \frac{\partial u_i}{\partial x_j} = -\frac{1}{\rho} \cdot \frac{\partial p}{\partial x_i} + \frac{\partial}{\partial x_j}\left[\nu\left(\frac{\partial u_i}{\partial x_j} + \frac{\partial u_j}{\partial x_i}\right)\right] + F_i \qquad \cdots (4-1)$$

$$\frac{\partial u_j}{\partial x_j} = 0 \quad \cdots (4-2)$$

In Expression (4-1), t is a time. $u_i$ (i = 1, 2, 3) is a component of the velocity in each axis direction. $x_i$ (i = 1, 2, 3) is each axial component of the coordinates. p is the pressure. ρ is the density. ν is a dynamic coefficient of viscosity. $F_i$ (i = 1, 2, 3) is a component of an external force in each axis direction. In Expression (4-1), a second term of a left member is an advective term. Furthermore, Expression (4-1) is an equation of momentum conservation in the i-th axis direction, and the density ρ of the fluid is constant due to the incompressible fluid, and thus in the advective term of Expression (4-1), a velocity $u_i$ in the i-th axis direction is advected. Hereinafter, for the sake of simple description, a sum of a second term (a viscosity term) and a third term (the external force) of a right member in Expression (4-1) is marked by -F (u), and the entire term of the right member will be described by using Expression (4-3) which is moved to a left member.

[Formula 43]

$$\frac{\partial u_i}{\partial t} + u_j \frac{\partial u_i}{\partial x_j} + \frac{1}{\rho} \cdot \frac{\partial p}{\partial x_i} + F(u) = 0 \qquad \cdots (4-3)$$

In the finite volume method of the related art, the Navier-Stokes equation is volume integrated by the control volume, and the discretized equation is solved. In the finite volume method, when the volume integration is performed, as in Expression (4-5), an equation which is obtained by adding Expression (4-4) in which both members of Expression (4-2) which is the continuity equation are multiplied by the velocity $u_i$ to the Navier-Stokes equation, and by deforming the advective term into a form referred to as the conservation form is used. The deformation of the advective term into the conservation form is a deformation premised on a fact that the velocity vector satisfies Continuity Equation (4-2).

[Formula 44]

$$u_i \frac{\partial u_j}{\partial x_j} = 0 \quad \cdots (4-4)$$

$$\frac{\partial u_i}{\partial t} + u_j \frac{\partial u_i}{\partial x_j} + u_i \frac{\partial u_j}{\partial x_j} + \frac{1}{\rho} \cdot \frac{\partial p}{\partial x_i} + F(u) =$$

$$\frac{\partial u_i}{\partial t} + \frac{\partial u_i u_j}{\partial x_j} + \frac{1}{\rho} \cdot \frac{\partial p}{\partial x_i} + F(u) = 0 \qquad \cdots (4-5)$$

In contrast, in this embodiment, it is presumed that the velocity vector u does not become "0" even when the velocity vector u is assigned to the left member of the continuity equation, and the error D exists as shown in Expression (4-6). For example, in a case where the velocity is obtained by a repeated calculation due to a calculation capacity problem or the like, when the calculation is not able to be performed until sufficient convergence is obtained, or the like, the size of the error D is not able to be neglected. Such an error easily occurs when the shape of the cell is elongated in a specific axis direction, or the like.

Next, when Expression (4-7) in which both members of Expression (4-6) are multiplied by velocity $u_i$ is added to Navier-Stokes Equation (4-1), Expression (4-8) is obtained. When an advective term of Expression (4-8) is deformed into a conservation form, and a right member of Expression (4-8) is moved to a left member, Expression (4-9) is obtained. Expression (4-9) is identical to Expression (4-5) using the finite volume method of the related art except for including a third term of a left member, and the third term includes a term of correcting an error in the advective term of the conservation form (that is, -$u_i$D). Hereinafter, in a state of including the term of correcting the error, the volume integration and the discretization are performed.

[Formula 45]

$$\frac{\partial u_j}{\partial x_j} = D \quad \cdots (4-6)$$

$$u_i \frac{\partial u_j}{\partial x_j} = u_i D \quad \cdots (4-7)$$

$$\frac{\partial u_i}{\partial t} + u_j \frac{\partial u_i}{\partial x_j} + u_i \frac{\partial u_j}{\partial x_j} + \frac{1}{\rho} \cdot \frac{\partial p}{\partial x_i} + F(u) = u_i D \quad \cdots (4-8)$$

$$\frac{\partial u_i}{\partial t} + \frac{\partial u_i u_j}{\partial x_j} - u_i D + \frac{1}{\rho} \cdot \frac{\partial p}{\partial x_i} + F(u) = 0 \quad \cdots (4-9)$$

When Expression (4-9) is volume integrated by the control volume, Expression (4-10) is obtained. In addition, when Expression (4-6) is volume integrated by the control volume, Expression (4-11) is obtained. Furthermore, in Expressions (4-10) and (4-11), V is the volume of the control volume, and S is a surface of the control volume. In addition, n and u in a bold typeface in a second term of a left member of Expression (4-10) and in a first term of a left member of Expression (4-11) are a unit normal vector of the surface S of the control volume and the velocity vector, respectively. The unit normal vector n is a vector which is perpendicular to the surface S of the control volume, is outward, and has a length of "1".

[Formula 46]

$$\int_V \frac{\partial u_i}{\partial t} dV + \int_S (\boldsymbol{n} \cdot \boldsymbol{u}) u_i dS - \int_V u_i D dV + \frac{1}{\rho} \int_S n_i p\, dS + \int_V F(u)\, dV = 0$$
$$\cdots (4-10)$$

$$\int_S (\boldsymbol{n} \cdot \boldsymbol{u}) dS = \int_V D dV \quad \cdots (4-11)$$

When Expressions (4-10) and (4-11), for example, are discretized with respect to a control volume $V_1$ of the cell $R_1$ of Fig. 6, an area $S_{1k}$ of a boundary surface $E_{1k}$ ($k \in N_1$, a class $N_1$ is {2, 3, 4, 11, 12, 13, and 14}), and a time $\Delta t$, and are converted into an approximate equation by using an algebraic equation, Expression (4-12) and Expression (4-13) are obtained. Furthermore, the boundary surface $E_{1k}$ is a boundary surface between the cell $R_1$ and the cell $R_k$. The class $N_1$ is a class of a cell ID of a cell which is adjacent to the cell $R_1$. In addition, $\Delta t$ is a width of the time step.

[Formula 47]

$$V_1\big(u_{1i} - u_{1i}(t - \Delta t)\big)\frac{1}{\Delta t} + \Sigma_{k \in N_1} S_{1k}(\boldsymbol{n}_{1k} \cdot \boldsymbol{u}_{1k})u_{1ki} - V_1 u_{1i} D_1$$
$$+ \frac{1}{\rho}\Sigma_{k \in N_1} S_{1k} n_i p_k + \big[\text{Discretization Term of } F(u)\big] = 0$$
$$\cdots (4-12)$$

$$\sum_{k\in N_1} S_{1k}(\boldsymbol{n}_{1k}\cdot\boldsymbol{u}_{1k}) = V_1 D_1 \quad \cdots \; (4-1\,3)$$

The area $S_{1k}$ is an area of the boundary surface between the cell $R_1$ and the cell Rk. In addition, $D_1$ is an error in the continuity equation of the cell $R_1$. $u_{1i}$ is a component of the velocity in the i-th axis direction of the cell $R_1$. $u_{1i}$ (t - $\Delta$t) is a component of the velocity in the i-th axis direction of the cell $R_1$ in the previous time step of the target time step. $u_{1ki}$ is a component of the velocity in the i-th axis direction of the boundary surface $E_{1k}$. $n_{1k}$ is a unit normal vector toward the cell $R_k$ of the boundary surface $E_{1k}$. $u_{1k}$ is a velocity vector of the boundary surface $E_{1k}$. $\rho$k is a pressure of the cell $R_k$.

Next, when Expression (4-13) is assigned to a third term of Expression (4-12), and a term of $\Sigma$ (a second term and a third term) is arranged, Expression (4-14) is obtained.

[Formula 48]

$$V_1\bigl(u_{1i} - u_{1i}(t-\Delta t)\bigr)\frac{1}{\Delta t} + \sum_{k\in N_1} S_{1k}(n_{1k}\cdot\boldsymbol{u}_{1k})\cdot u_{1ki} - u_{1i}\sum_{k\in N_1} S_{1k}(n_{1k}\cdot\boldsymbol{u}_{1k}) +$$

$$\frac{1}{\rho}\sum_{k\in N_1} S_{1k} n_i p_k + \bigl[\text{Discretization Term of } F(u)\bigr] =$$

$$V_1\bigl(u_{1i} - u_{1i}(t-\Delta t)\bigr)\frac{1}{\Delta t} + \sum_{k\in N_1} S_{1k}(\boldsymbol{n}_{1k}\cdot\boldsymbol{u}_{1k})(u_{1ki} - u_{1i}) + \frac{1}{\rho}\sum_{k\in N_1} S_{1k} n_i p_k + \bigl[\text{Discretization Term of } F(u)\bigr] =$$

$$0 \quad \cdots \; (4-1\,4)$$

In this embodiment, Expression (4-14) is one of first order equations configuring the linear simultaneous equation. However, Expression (4-14) includes multiplication between the velocities which are unknowns in a second term, and thus is not a first order equation. Therefore, approximation is performed in which the velocity vector of the previous time step is used as the velocity vector $u_{1k}$ in the second term. In addition, for the sake of simple description, approximation in which the velocity vector of the previous time step is used is performed with respect to a discretization term of F (u).

In addition, the velocity $u_{1ki}$ of the boundary surface $E_{1k}$ is interpolated from the velocity $u_{1i}$ of the cell $R_1$ and the velocity $u_{ki}$ of the cell $R_k$. As an interpolation method, various methods are included, any method may be used, and in this embodiment, a primary upwind scheme is used. In the primary upwind scheme, a velocity of a cell on an upwind side is used as the velocity of the boundary surface. The unit normal vector $n_{1k}$ is an outward vector which is seen from the cell R1. For this reason, when an inner product between the unit normal vector $n_{1k}$ and the velocity vector $V_{1k}$ of the boundary surface is a negative value, the cell $R_k$ of the boundary surface $E_{1k}$ is upwind, and when the inner product is a positive value, the cell $R_1$ is upwind. When the primary upwind scheme is denoted by an equation, the primary upwind scheme becomes Expression (4-15). Furthermore, when the inner product is a negative value, it is referred to as inflow to the cell $R_1$, and when the inner product is a positive value, it is referred to as outflow from the cell $R_1$.

[Formula 49]

$$\left.\begin{array}{l} u_{1ki} = u_{ki}: \boldsymbol{n}_{1k}\cdot\boldsymbol{u}_{1k} \le 0 \\ u_{1ki} = u_{1i}: \boldsymbol{n}_{1k}\cdot\boldsymbol{u}_{1k} > 0 \end{array}\right\} \quad \cdots \; (4-1\,5)$$

When Expression (4-15) is assigned to Expression (4-14), $\Sigma$ becomes "0" at the time of the outflow from the cell $R_1$. Further, in order to be the first order equation, the velocity vector $u_{1k}$ of the boundary surface $E_{1k}$ is a velocity vector $u_{1k}'$ which is obtained by being interpolated from the velocity vector of each cell in the previous time step. In this embodiment, as an interpolation method, a method is used in which a proportional distribution is performed with respect to velocity vectors $u_1'$ and $u_1'$ of the previous time step by using a distance $\alpha_{1k}$ stored in the cell configuration memory unit 102, as shown in Expression (4-16).

[Formula 50]

$$\boldsymbol{u}_{1k}' = \alpha_{1k}\boldsymbol{u}_1' + (1 - \alpha_{1k})\boldsymbol{u}_k' \cdots (4-1\,6)$$

Accordingly, Expression (4-14) becomes Expression (4-17). However, a class $N_1'$ is a class having a cell number of a cell inflowing to the cell $R_1$ among cells adjacent to the cell $R_1$ as an element. When Expression (4-17) is deformed, Expression (4-17) becomes Expression (4-18), and thus becomes the first order equation in which an i axis component $u_{1i}$ of the velocity of the cell $R_1$ and an i axis component $u_{ki}$ of the velocity of the adjacent cells $R_k$, the pressure p of the

cell $R_1$ are unknowns. Furthermore, in a case of three dimensions, Expression (4-18) is established with respect to each i = 1, 2, 3.

[Formula 51]

$$V_1\left(u_{1i} - u_{1i}(t - \Delta t)\right) \cdot \frac{1}{\Delta t} + \sum_{k \in N_1'} S_{1k}(\boldsymbol{n}_{1k} \cdot \boldsymbol{u}_{1k}')\left(u_{ki} - u_{1i}\right)$$

$$+ \frac{1}{\rho}\sum_{k \in N_1} S_{1k} n_i p + \left[\text{Discretization Term of } F(u)\right] = 0 \quad \cdots (4-17)$$

$$\left(\frac{V_1}{\Delta t} - \sum_{k \in N_1'} S_{1k}(\boldsymbol{n}_{1k} \cdot \boldsymbol{u}_{1k}')\right) u_{1i} + \sum_{k \in N_1'} S_{1k}(\boldsymbol{n}_{1k} \cdot \boldsymbol{u}_{1k}') \cdot u_{ki} + \frac{1}{\rho}\sum_{k \in N_1} S_{1k} n_i p$$

$$= \frac{1}{\Delta t} u_{1i}(t - \Delta t) - \left[\text{Discretization Term of } F(u)\right] \quad \cdots (4-18)$$

In addition, when Expression (4-2) which is the continuity equation is discretized with respect to the control volume $V_1$ of the cell $R_1$, and the area $S_{lk}$ of the boundary surface $E_{1k}$ (k ∈ $N_1$, the class $N_1$ is {2, 3, 4, 11, 12, 13, and 14}), and is converted into the approximate equation by using the algebraic equation, Expression (4-19) is obtained. When the same interpolation as that of Expression (4-16) is used, Expression (4-19) becomes Expression (4-20), and thus becomes the first order equation in which each component of the velocity of the cell $R_1$, and each component of the velocity of the adjacent cells $R_k$ are unknowns.

[Formula 52]

$$\sum_{k \in N_1} S_{1k}(\boldsymbol{n}_{1k} \cdot \boldsymbol{u}_{1k}) = 0 \quad \cdots (4-19)$$

$$\sum_{k \in N_1} S_{1k}\left(\boldsymbol{n}_{1k} \cdot (\alpha_{1k} \boldsymbol{u}_1 + (1 - \alpha_{1k})\boldsymbol{u}_k)\right) =$$
$$\sum_{k \in N_1} S_{1k} \alpha_{1k}(\boldsymbol{n}_{1k} \cdot \boldsymbol{u}_1) + \sum_{k \in N_1} S_{1k}(1 - \alpha_{1k})(\boldsymbol{n}_{1k} \cdot \boldsymbol{u}_k) = 0 \quad \cdots (4-20)$$

Expressions (4-18) and (4-20) are equations relevant to the cell $R_1$, and the same equation is able to be established with respect to each of other cells. The velocity and pressure calculation unit 106 sets each unknown coefficient of Expressions (4-18) and (4-20) with respect to all of the cells as an element of the matrix A, and sets a right member as an element of the vector b.

As described above, when the Navier-Stokes equation of the incompressible fluid is discretized, the advective term is deformed into the conservation form by adding the continuity equation. At this time, in this embodiment, it.is presumed that the continuity equation includes the error D, and the discretization is performed by including the term of correcting the error D. Accordingly, even when the velocity of each time step does not completely satisfy the continuity equation, it is possible to suppress an influence due to the error, and thus an excellent simulation result is able to be obtained.

Furthermore, in this embodiment, a case where the Navier-Stokes equation and the continuity equation are solved with coalition will be described, and in addition to this, other equations may be solved with coalition. In this case, when the other equation also includes the advective term, similar to the Navier-Stokes equation, the discretization may be performed by including the term of correcting the error D of the advective term. Accordingly, it is possible to suppress an influence due to the error with respect to the equation, and thus an excellent simulation result is able to be obtained.

In addition, when the velocity and pressure calculation unit 106 calculates a solution of each time step, an initial value of the solution is necessary at the time of using an iteration method such as a conjugate gradient method, and as the initial value, the solution of the previous time step may be used. In this case, the velocity field acquisition unit 105 acquires the pressure of the previous time step from the pressure field memory unit 107, and inputs the pressure to the velocity and pressure calculation unit 106.

[Second Embodiment]

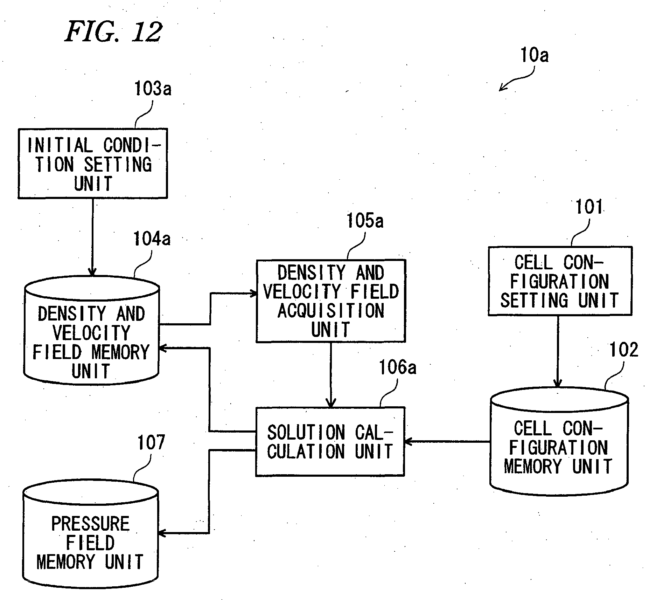

Hereinafter, a second embodiment of the present invention will be described with reference to the drawings. In the second embodiment, a case where compressible fluid is simulated will be described. Fig. 12 is a schematic block diagram illustrating a configuration of a fluid simulation device 10a according to the second embodiment of the invention. The fluid simulation device 10a of this embodiment is a simulation device which simulates the compressible fluid by a finite volume method, and calculates a velocity, a pressure, and a density in a simulation region.

As illustrated in Fig. 12, the fluid simulation device 10a includes the cell configuration setting unit 101, the cell configuration memory unit 102, an initial condition setting unit 103a, a density and velocity field memory unit 104a, a density-and velocity field acquisition unit 105a, a solution calculation unit 106a, and the pressure field memory unit 107. In the same drawing, the same symbols (101, 102, and 107) are applied to parts corresponding to the respective parts of Fig. 5, and thus the description thereof will be omitted.

The initial condition setting unit 103a sets a velocity vector and a density of each cell as initial conditions, and stores the velocity vector and the density in the density and velocity field memory unit 104a. The density and velocity field memory unit 104a stores the velocity vector and the density of each of the cells which are set by the initial condition setting unit 103a. In addition, the density and velocity field memory unit 104a also stores a velocity vector and a density of each of the cells which are calculated by the solution calculation unit 106a in each time step. When the solution calculation unit 106a calculates a solution relevant to the time step n, the density and velocity field acquisition unit 105a reads out a velocity vector and a density of each of the cells in the time step n-1 from the density and velocity field memory unit 104a.

The solution calculation unit 106a calculates the velocity vector and the density of each of the cells in the time step n-1 which are read from the density and velocity field memory unit 104a by the density and velocity field acquisition unit 105a, and a velocity vector, a pressure, and a density of each of the cells in the target time step n by using the cell information stored in the cell configuration memory unit 102. The solution calculation unit 106a stores the calculated velocity vector and density of each of the cells in the density and velocity field memory unit 104, and stores the calculated pressure in the pressure field memory unit 107.

The solution calculation unit 106a solves a linear simultaneous equation including a discretization equation in which a Navier-Stokes equation of the compressible fluid is discretized, a discretization equation in which a continuity equation of the compressible fluid is discretized, and a discretization equation in which a state equation indicating a relationship between the density and the pressure is discretized calculates the velocity vector, the pressure, and the density of each of the cells. When the solution calculation unit 106a solves the linear simultaneous equation, for example, a solution method of a known linear simultaneous equation such as a conjugate gradient method is used. Furthermore, as the state equation, for example, $p \cdot 1 / p = RT$ is used. Here, R is a gas constant, and T is a temperature (a thermal dynamics temperature). In this embodiment, the temperature T is constant. Furthermore, the temperature T may not be constant, but may be known in advance. In addition, when the temperature T is not known in advance, a discretization equation in which the temperature T is a variable may be included in the linear simultaneous equation described above.

The discretization equation described above in which the Navier-Stokes equation of the compressible fluid is discretized will be described. In general, the Navier-Stokes equation of the compressible fluid in an i-th axis direction is denoted as Expression (4-21). In addition, in general, the continuity equation of the incompressible fluid is denoted as Expression (4-22). Furthermore, in this embodiment, an orthogonal coordinate system (a Cartesian coordinate system) is used as a coordinate system. In Expression (4-21), $\mu$ is a coefficient of viscosity.
[Formula 53]

$$\rho \frac{\partial u_i}{\partial t} + \rho u_j \frac{\partial u_i}{\partial x_j} = -\frac{\partial p}{\partial x_i} + \frac{\partial}{\partial x_j}\left[\mu\left(\frac{\partial u_i}{\partial x_j} + \frac{\partial u_j}{\partial x_i}\right)\right] + \rho F_i \cdot \cdot \cdot (4-21)$$

$$\frac{\partial \rho}{\partial t} + \frac{\partial \rho u_j}{\partial x_j} = 0 \quad \cdot \cdot \cdot (4-22)$$

In this embodiment, it is presumed that the error D exists even when a velocity vector u is assigned to Expression (4-22) which is the continuity equation. Similar to the first embodiment, when a right member of Expression (4-22) is set to the error D, and both members are multiplied by $u_i$, Expression (4-23) is obtained. Then, when Expression (4-23) is added to Navier-Stokes Equation (4-21), Expression (4-24) is obtained.
[Formula 54]

$$u_i \left( \frac{\partial \rho}{\partial t} + \frac{\partial \rho u_j}{\partial x_j} \right) = u_i D \quad \cdots (4-2 \ 3)$$

$$\rho \left( \frac{\partial u_i}{\partial t} + u_j \frac{\partial u_i}{\partial x_j} \right) + u_i \left( \frac{\partial \rho}{\partial t} + \frac{\partial \rho u_j}{\partial x_j} \right) - u_i D + \frac{\partial p}{\partial x_i} + \rho F(u) = 0 \quad \cdots (4-2 \ 4)$$

When Expression (4-24) is arranged, Expression (4-24) becomes Expression (4-25) which is a conservation form. Expression (4-25) is identical to an equation used in the finite volume method of the related art except for including a third term of a left member, and the third term includes a term of correcting an error in the advective term of the conservation form (that is, -u$_i$D).
[Formula 55]

$$\frac{\partial \rho u_i}{\partial t} + \frac{\partial u_j \rho u_i}{\partial x_j} - u_i D + \frac{\partial p}{\partial x_i} + \rho F(u) = 0 \quad \cdots (4-2 \ 5)$$

When Expression (4-25) is volume integrated by the control volume, Expression (4-26) is obtained. In addition, when an equation in which a right member of Expression (4-22) is set to the error D is also volume integrated by the control volume, Expression (4-27) is obtained. Similar to the first embodiment, V is the volume of the control volume, and S is the surface of the control volume. In addition, n and u in a bold typeface in a second term of a left member of Expression (4-26) are a unit normal vector of the surface S of the control volume and a velocity vector, respectively. The unit normal vector n is a vector which is perpendicular to the surface S of the control volume, is outward, and has a length of "1".
[Formula 56]

$$\int_V \frac{\partial \rho u_i}{\partial t} dV + \int_S (\boldsymbol{n} \cdot \boldsymbol{u}) \rho u_i dS - \int_V u_i D dV + \int_S n_i p \, dS + \int_V \rho F(u) \, dV = 0$$
$$\cdots (4-2 \ 6)$$

$$\int_V \frac{\partial \rho}{\partial t} dV + \int_S (\boldsymbol{n} \cdot \boldsymbol{u}) dS = \int_V D dV \quad \cdots (4-2 \ 7)$$

When Expressions (4-26) sand (4-27), for example, are discretized with respect to the control volume $V_1$ of the cell $R_1$ of Fig. 6, the area $S_{1k}$ of the boundary surface $E_{1k}$ (k $\in$ $N_1$, the class $N_1$, is {2, 3, 4, 11, 12, 13, and 14}), and the time $\Delta t$, and are converted into an approximate equation by using an algebraic equation, Expression (4-28) and Expression (4-29) are obtained.
[Formula 57]

$$V_1 \frac{\partial \rho_1 u_{1i}}{\partial t} + \sum_{k \in N_1} S_{1k} (\boldsymbol{n}_{1k} \cdot \boldsymbol{u}_{1k}) \rho_{1k} u_{1ki} - V_1 u_{1i} D_1 + \sum_{k \in N_1} S_{1k} n_i p_k + \left[ \text{Discretization Term of } \rho F(u) \right] = 0$$
$$\cdots (4-2 \ 8)$$

$$V_1 \frac{\partial \rho_1}{\partial t} + \sum_{k \in N_1} S_{1k} (\boldsymbol{n}_{1k} \cdot \boldsymbol{u}_{1k}) \rho_{1k} = V_1 D_1 \quad \cdots (4-2 \ 9)$$

When Expression (4-29) is assigned to a third term of Expression (4-28), Expression (4-30) is obtained. Similar to the first embodiment, a primary upwind scheme or the like is applied to Expression (4-30), and thus Expression (4-30) becomes a first order equation in which the velocity vector and the pressure are unknowns.
[Formula 58]

[Formula 58]

$$V_1 \frac{\partial \rho_1 u_{1i}}{\partial t} + \sum_{k \in N_1} S_{1k}(n_{1k} \cdot \boldsymbol{u}_{1k})\rho_{1k}u_{1ki} - u_{1i}\left(V_1 \frac{\partial \rho}{\partial t} + \sum_{k \in N_1} S_{1k}(n_{1k} \cdot \boldsymbol{u}_{1k})\rho_{1k}\right)$$

$$+ \sum_{k \in N_1} S_{1k}n_i p_k + \left[ \text{Discretization Term of } \rho F(u) \right] =$$

$$V_1\rho_1 \frac{\partial u_{1i}}{\partial t} + \sum_{k \in N_1} S_{1k}(n_{1k} \cdot \boldsymbol{u}_{1k})\rho_{1k}u_{1ki} - u_{1i}\sum_{k \in N_1} S_{1k}(n_{1k} \cdot \boldsymbol{u}_{1k})\rho_{1k}$$

$$+ \sum_{k \in N_1} S_{1k}n_i p_k + \left[ \text{Discretization Term of } \rho F(u) \right] =$$

$$\cdots(4-30)$$

Expression (4-30) is an equation relevant to the cell R1, and the same equation is able to be established with respect to each of other cells. The solution calculation unit 106a sets each unknown coefficient of Expression (4-30) with respect to all of the cells as the element of the matrix A, and sets a right member as the element of the vector b.

As described above, when the Navier-Stokes equation of the compressible fluid is discretized, the advective term is deformed into the conservation form by adding the continuity equation. At this time, in this embodiment, it is presumed that the continuity equation includes the error D, and the discretization is performed by including the term of correcting the error D. Accordingly, even when the velocity of each time step does not completely satisfy the continuity equation, it is possible to suppress an influence due to the error, and thus an excellent simulation result is able to be obtained.

Furthermore, in this embodiment, a case where the Navier-Stokes equation, the continuity equation, and the state equation are solved with coalition will be described, and in addition to this, other equations may be solved with coalition. In this case, when the other equation also includes the advective term, similar to the Navier-Stokes equation, the discretization may be performed by including the term of correcting the error D of the advective term. Accordingly, it is possible to suppress an influence due to the error with respect to the equation, and thus an excellent simulation result is able to be obtained.

[Third Embodiment]

Hereinafter, a third embodiment of the present invention will be described with reference to the drawings. In the first embodiment and the second embodiment, as the equation including the advective term, the Navier-Stokes equation is included, and the fluid simulation devices 10 and 10a solving the equation are described. In this embodiment, as the equation including the advective term, an equation for conservation of thermal energy of the continuum is included, and a continuum simulation device 10b solving the equation by a finite volume method will be described. Furthermore, in the continuum simulation device 10b of this embodiment, as a velocity vector of each time step in a simulation region, a value input from the outside is used. The velocity vector input from the outside may be calculated in advance by a simulation, or may be observation data or experiment data.

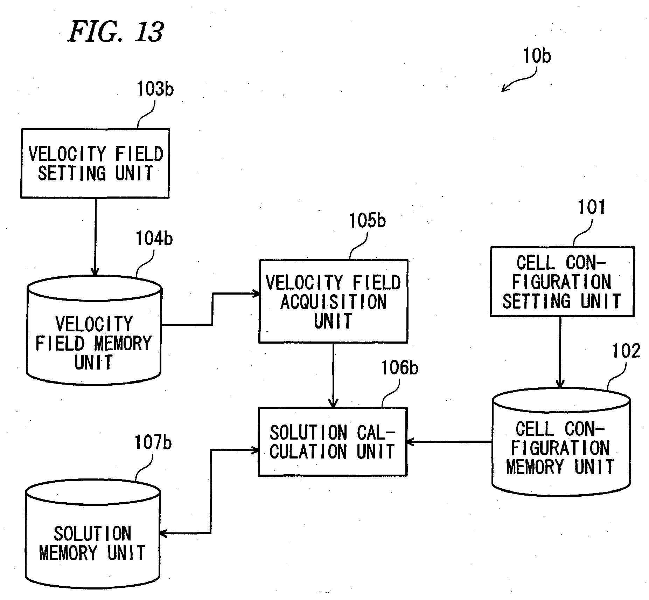

Fig. 13 is a schematic block diagram illustrating a configuration of a continuum simulation device 1 according to the third embodiment of the invention. The continuum simulation device 10b of this embodiment includes the cell configuration setting unit 101, the cell confguration memory unit 102, a velocity field setting unit 103b, a velocity field memory unit 104b, a velocity field acquisition unit 105b, a solution calculation unit 106b, and a solution memory unit 107b. In the same drawing, the same symbols (101 and 102) are applied to parts corresponding to the respective parts of Fig. 5, and thus the description thereof will be omitted.

The velocity field setting unit 103b stores a velocity vector of each of the cells which is input from the outside in the velocity field memory unit 104b. Furthermore, in this embodiment, as the velocity vector, a velocity vector of all time steps which become a simulation target is input. The velocity field memory unit 104b stores the velocity vector of each of the cells. When the solution calculation unit 106b calculates a solution relevant to the time step n, the velocity field acquisition unit 105b reads out the velocity vector of each of the cells in the time step n-1 from the velocity field memory unit 104b.

The solution calculation unit 106b calculates a solution of an equation for conservation of thermal energy in the target time step n by using the velocity vector of each of the cells in the time step n-1 which is read from the velocity field memory unit 104b by the velocity field acquisition unit 105b, the cell information stored in the cell configuration memory unit 102, and a solution of the time step n-1 stored in the solution memory unit 107b. The solution calculation unit 106b stores the calculated solution in, the solution memory unit 107b as a solution of the target time step n.

Furthermore, when the solution is calculated, the solution calculation unit 106b uses a discretization equation in which an equation for energy conservation denoted by Expression (4-31) is discretized. As shown in Expression (4-31), the equation for energy conservation includes an advective term of a second term of a left member. The density ρ is not constant, and thus the solution calculation unit 106b uses a discretization equation in which Expression (4-31) is discretized, similar to the discretization of the Navier-Stokes equation in the second embodiment.

[Formula 59]

$$\rho \frac{\partial U}{\partial t} + \rho u_j \frac{\partial U}{\partial x_j} = -\frac{\partial q_j}{\partial x_j} + \rho \gamma + \sigma_{ij} D_{ij} \quad \cdot \cdot \cdot (4-3\ 1)$$

U: Internal Energy of Continuum
$q_j$ (j = 1, 2, 3): Thermal Flow Velocity Vector Component
p: Density of Continuum
y: Heat Source (Source/Sink of Thermal Energy)
$\sigma_{ij}$ (i, j = 1, 2, 2): Internal Stress Tensor of Continuum
$D_{ij}$ (i, j = 1, 2, 2): Deformation Velocity Tensor of Continuum
$u_j$ (j = 1, 2, 3): Velocity Vector Component of Continuum

As described above, when the equation for energy conservation is discretized, the advective term is deformed into the conservation form by adding the continuity equation. At this time, in this embodiment, it is presumed that the continuity equation includes the error D, and the discretization is performed by including the term of correcting the error D. Accordingly, even when the velocity of each time step which is input from the outside does not completely satisfy the discretized continuity equation, it is possible to suppress an influence due to the error, and thus an excellent simulation result is able to be obtained.

Furthermore, an advection diffusion equation describing an advection diffusion phenomenon of a substance in the continuum also includes an advective term in which a concentration of the substance is advected as shown in Expression (4-32). For this reason, a discretization equation may be solved in which the advection diffusion equation is discretized similarly to the equation for energy conservation.

[Formula 60]

$$\rho \frac{\partial C}{\partial t} + \rho u_i \frac{\partial C}{\partial x_j} = \frac{\partial}{\partial x_j} \left( \mu_c \cdot \frac{\partial C}{\partial x_j} \right) + \rho q_c \quad \cdot \cdot \cdot (4-3\ 2)$$

C: Concentration of Substance C
$\mu_c$: Diffusion Coefficient of Substance C
$q_c$: Source/Sink Term of Substance C
p: Density of Continuum
$u_i$ (i = 1, 2, 3): Deformation Velocity Component of Continuum

In addition, an equation for a stress field describing a stress field in the continuum also includes an advective term in which a deformation velocity of the continuum is advected as shown in Expression (4-33). For this reason, a discretization equation may be solved in which the equation for a stress field is discretized similarly to the Navier-Stokes equation.

[Formula 61]

$$\rho \frac{\partial u_i}{\partial t} + \rho u_j \frac{\partial u_i}{\partial x_j} = \frac{\partial \sigma_{ij}}{\partial x_j} + \rho F_i \quad \cdot \cdot \cdot (4-3\ 3)$$

p: Density of Continuum
$u_i$ (i = 1, 2, 3): Deformation Velocity Component of Continuum
$\sigma_{ij}$: Internal Stress Tensor of Continuum
$F_i$: External Force Vector Component Acting on Continuum

Furthermore, in an equation indicating a phenomenon according to a movement and deformation of the continuum, substance derivation including an advective term is used. A discretization equation may be solved in which the equation is discretized similarly to each of the embodiments described above.

[Fourth Embodiment]

Hereinafter, a fourth embodiment of the present invention will be described with reference to the drawings. In the fourth embodiment, a fluid simulation device 10c which solves an equation including a plurality of advective terms by a finite volume method will be described. Furthermore, in this embodiment, as an example of a simulation device concurrently solving a plurality of equations including an advective term, the fluid simulation device 10c which concurrently solves a Navier-Stokes equation and an equation for conservation of thermal energy is described.

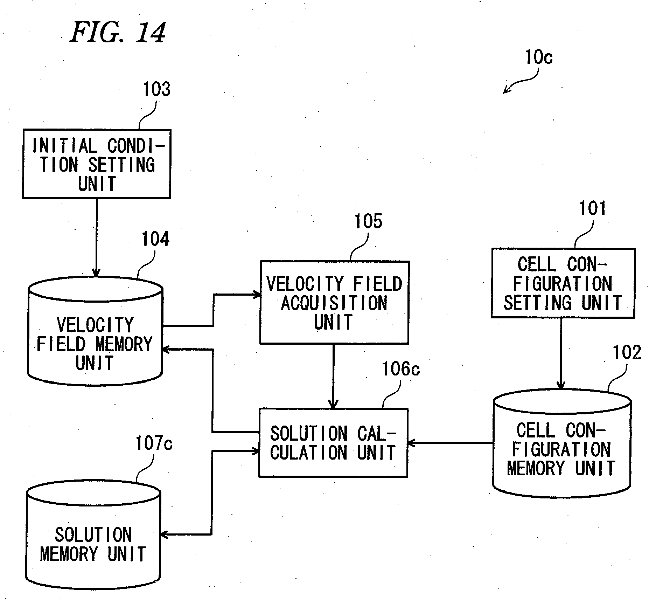

Fig. 14 is a schematic block diagram illustrating a configuration of the fluid simulation device 10c according to the fourth embodiment of the invention. The fluid simulation device 10c of this embodiment includes the cell configuration setting unit 101, the cell configuration memory unit 102, the initial condition setting unit 103, the velocity field memory unit 104, the velocity field acquisition unit 105, a solution calculation unit 106c, and a solution memory unit 107c. In the same drawing, the same symbols (101 to 105) are applied to parts corresponding to the respective parts of Fig. 5, and thus the description thereof will be omitted.

The solution calculation unit 106c calculates a solution of a Navier-Stokes equation, a continuity equation, and an equation for conservation of thermal energy in the target time step n by using the velocity vector of each of the cells in the time step n-1 which is read from the velocity field memory unit 104 by the velocity field acquisition unit 105, the cell information stored in the cell configuration memory unit 102, and a solution of the time step n-1 stored in the solution memory unit 107c. The solution calculation unit 106c stores the calculated solution in the solution memory unit 107c as the solution of the target time step n. Furthermore, the solution calculation unit 106c stores the velocity among the calculated solutions in the velocity field memory unit 104.

Furthermore, the solution calculation unit 106c uses the discretization equation of the first embodiment in which the Navier-Stokes equation and the continuity equation are discretized, and the discretization equation of the third embodiment in which the equation for conservation of thermal energy is discretized.

Furthermore, in this embodiment, as an example of the simulation device concurrently solving the plurality of equations including the advective term, a case where the Navier-Stokes equation and the equation for conservation of thermal energy are concurrently solved will be described, and other combinations may be used.

In this embodiment, when each of the equations including the advective term is discretized, the advective term is deformed into the conservation form by adding the continuity equation. At this time, similar to the first embodiment to the third embodiment, it is presumed that the continuity equation includes the error D, and the discretization is performed by including the term of correcting the error D. Accordingly, even when the calculated velocity of time step does not completely satisfy the discretized continuity equation, it is possible to suppress an influence due to the error, and thus an excellent simulation result is able to be obtained.

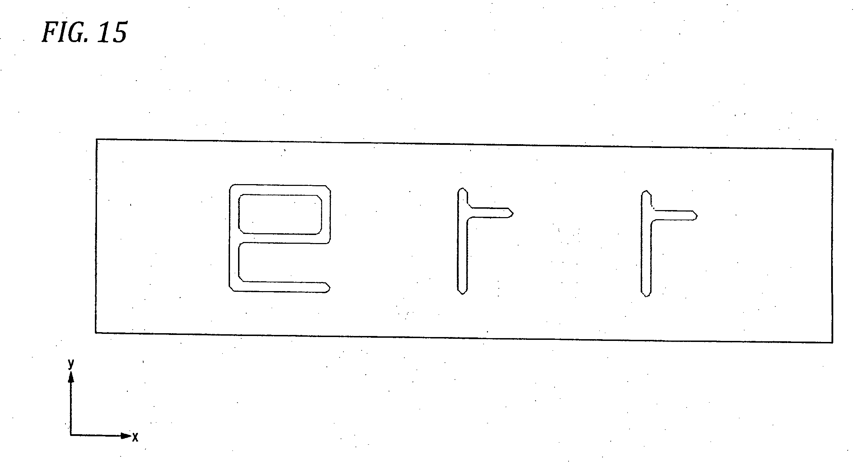

Next, as an example of a simulation result using the present invention, an example in which a temperature distribution is calculated by the continuum simulation device 10b of the third embodiment will be described. Fig. 15 is a contour diagram illustrating a velocity field of a simulation target. That is, Fig. 15 is a contour diagram of the size of the velocity vector of each of the cells stored in the velocity field memory unit 104b by the velocity field setting unit 103b. Furthermore, the velocity field is calculated as a velocity field having no time change. In Fig. 15, a horizontal axis is an x axis, a vertical axis is a y axis, and the size of the velocity field is 4 m in an x axis direction and 1 m in a y axis direction. In the contour diagram of Fig. 15, the fluid uniformly flows from left to right at 1 m/s (a positive direction of the x axis), and there is a region in the shape of "err" in the velocity field in which the fluid flows from left to right at 1.2 m/s. Furthermore, the velocity in the y axis direction is 0.

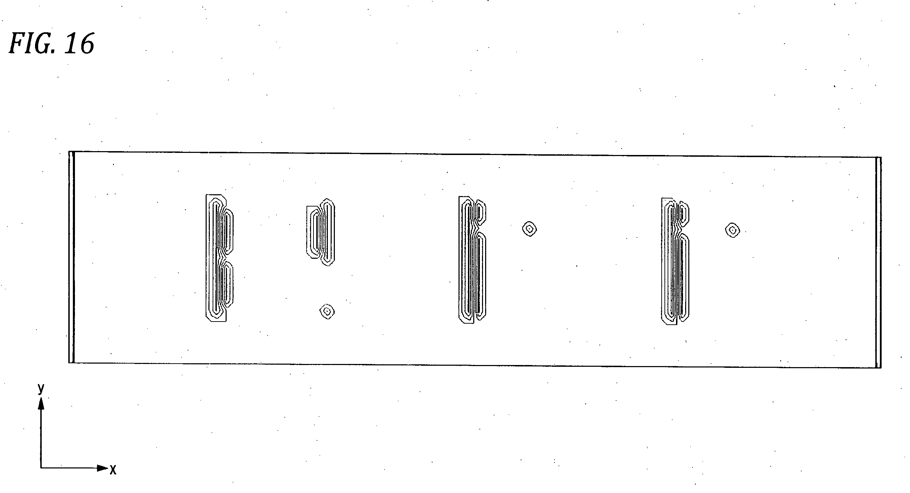

Fig. 16 is a contour diagram illustrating the size of a divergence of the velocity in the velocity field illustrated in Fig. 15. In Fig. 16, a horizontal axis is an x axis, and a vertical axis is a y axis. The divergence of the velocity is identical to the left member of the continuity equation shown in Expression (2-3). That is, when the velocity field of Fig. 15 completely satisfies the continuity equation, the contour diagram of Fig. 16 will be uniformly "0". However, in the velocity field illustrated in Fig. 15, there is the region in the shape of "err" in which the velocity is 1.2 m/s, and thus the velocity does not become "0" at right and left ends of the region.

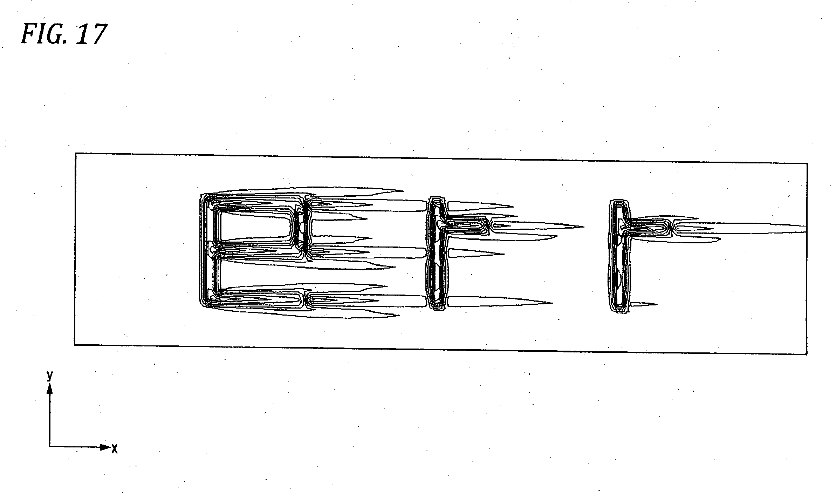

Fig. 17 is a contour diagram illustrating an example in which the temperature distribution of the velocity field illustrated in Fig. 15 is calculated by using the method of the related art. Furthermore, an initial value of the temperature distribution is uniformly 100°C, and the temperature distribution illustrated in Fig. 17 is a temperature distribution in a normal state. In Fig. 17, a horizontal axis is an x axis, a vertical axis is a y axis, and a contour is a line in which a temperature of 83°C to 107°C is divided into 13 steps. As illustrated in Fig. 17, when the temperature distribution is calculated by using the method of the related art, even though the initial value of the temperature distribution is uniformly 100°C, a region exceeding or falling below 100°C is formed on a downstream side from the right and left ends of the region in the shape of "err". This is because, in the right and left ends of the region in the shape of "err", the divergence of the velocity does not become "0", and thus a pseudo thermal sink/source occurs in this portion.

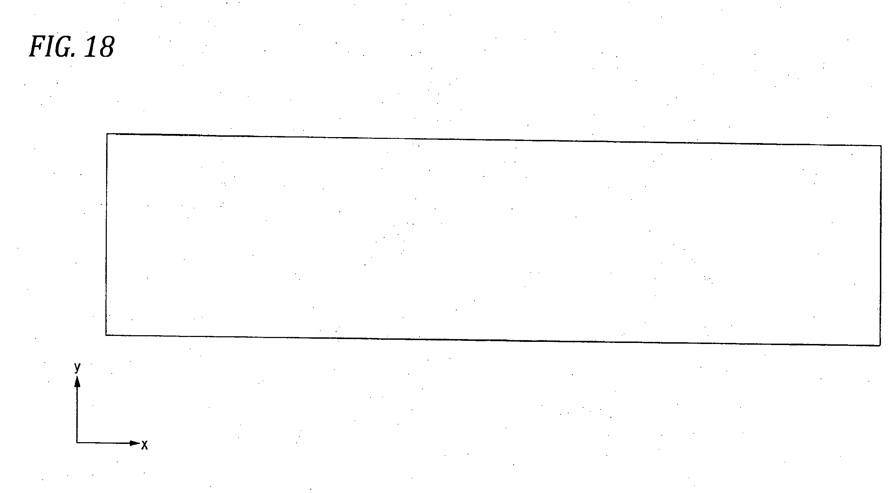

Fig. 18 is a contour diagram illustrating an example in which the temperature distribution of the velocity field illustrated in Fig. 15 is calculated by the continuum simulation device 10b of the third embodiment. In the example of Fig. 18, the initial value of the temperature distribution is uniformly 100°C, and the temperature distribution is a temperature distribution in a normal state. In Fig. 18, a horizontal axis is an x axis, a vertical axis is a y axis, and a contour is a line in which a temperature of 83°C to 107°C is divided into 13 steps. As illustrated in Fig. 18, in the temperature distribution calculated by the continuum simulation device 10b, a pseudo thermal sink/source does not occur, and thus the temperature is uniformly 100°C. When the fluid of which the temperature is uniformly 100°C flows, the temperature is uniformly 100°C even when time progresses, and thus it is understood that a preferred simulation result is able to be obtained by the continuum simulation device 10b.

In addition, the fluid simulation devices 10 and 10a, and the continuum simulation device 10b may be realized by recording a program for realizing a function of each part or a function of a part thereof in Fig. 5, Fig. 12, Fig. 13, and Fig. 14 in a computer readable recording medium, by reading the program recorded in the recording medium into a computer system, and by executing the program. Furthermore, the "computer system" herein, includes hardware such as OS or peripheral equipment.

In addition, the "computer readable recording medium" is a memory device such as flexible disk, magnetooptic disk, a portable medium such as ROM, and CD-ROM, and hard disk embedded in the computer system. Further, the "computer readable recording medium" includes a medium dynamically storing the program for a short period of time such as a communication wire at the time of transmitting the program through a network such as Internet or a communication line such as a telephone circuit, and a medium storing the program for a constant period of time such as a volatile memory inside the computer system which is a server or a client at this time. In addition, the program described above may be a program for realizing a part of the function described above, or may be a program for realizing the function described above by being combined with the program which is recorded in the computer system in advance.

In addition, the simulation device of the present invention, for example, is able to be used in a generation source estimation device disclosed in JP-A-2012-132824. In the generation source estimation device, position information of observers disposed in a plurality of portions and measured concentration information are obtained, and on the basis of the information, an ejection spot is estimated from plurality of virtual ejection spots which is set in advance. At this time, when the virtual ejection spot is a generation source, and a unit amount is ejected, what extent of concentration is measured by the observer (an influence function in the literature described above) is estimated with respect to each one of the virtual ejection spots, and the estimation result is used. In order to estimate a measurement value of the concentration, the continuum simulation device described in the third embodiment described above which solves the advection diffusion equation is able to be used without using a setting method of the virtual ejection spot. Alternately, as described in the fourth embodiment, the fluid simulation device which concurrently solves the Navier-Stokes equation and the advection diffusion equation is able to be used. Accordingly, it is possible to estimate the concentration measured by each observer with excellent accuracy, and thus it is also possible to estimate the generation source with excellent accuracy. Furthermore, the generation source may be gas or liquid.

As described above, the embodiments of the invention are described in detail with reference to the drawings, the specific configuration is not limited to the embodiments, but includes design changes or the like within a range not deviating from the gist of the invention.

This application is described in detail and with reference to the specific embodiments, and it is obvious to a person skilled in the art that various changes or corrects not deviating from the scope and the range of the present invention are able to be added.

This application is based on Japanese Patent Application (Japanese Patent Application No. 2012-241260), filed October 31, 2012, the content of which is incorporated herein by reference.

DESCRIPTION OF REFERENCE NUMERALS

    10, 10a, 10c...Fluid simulation device
    10b...Continuum simulation device
    101...Cell configuration setting unit
    102....cell configuration memory unit
    103, 103a...Initial condition setting unit
    103b...Velocity field setting unit
    104, 104b...Velocity field memory unit
    104a...Density and velocity field memory unit
    105, 105b... Velocity field acquisition unit
    105a....Density and velocity field acquisition unit

106... Velocity and pressure calculation unit
106a, 106b, 106c... Solution calculation unit
107...Pressure field memory unit
107b, 107c...Solution memory unit

**Claims**

1. A simulation device calculating a solution of an equation including an advective term, comprising:

   a velocity field acquisition unit which acquires a velocity field; and
   a solution calculation unit which applies the velocity field acquired by the velocity field acquisition unit to a discretization equation obtained by adding at least two operations to the equation, and calculates a solution of the discretization equation,
   wherein the two operations includes deformation of the advective term into a conservation form, and a term of correcting an error in the conservation form of the advective term.

2. The simulation device according to Claim 1,
   wherein the term of correcting the error in the conservation form of the advective term is a term of correcting an error which occurs due to the fact that the velocity field does not satisfy a continuity equation.

3. The simulation device according to Claim 2,
   wherein the term of correcting the error is a term obtained by performing at least an integration which is identical to an integration with respect to the equation with respect to the continuity equation.

4. The simulation device according to Claim 2,
   wherein the solution calculation unit calculates a velocity field in a next time step by using at least the continuity equation, and
   the velocity field acquired by the velocity field acquisition unit is a velocity field calculated by the solution calculation unit.

5. The simulation device according to Claim 2,
   wherein the velocity field acquisition unit acquires a velocity field which is stored in advance.

6. A simulation method calculating a solution of an equation including an advective term, comprising:

   a first step of acquiring a velocity field; and
   a second step of applying the velocity field acquired in the first step to a discretization equation obtained by adding at least two operations to the equation including the advective term, and of calculating a solution of the discretization equation,
   wherein the two operations include deformation of the advective term into a conservation form, and a term of correcting an error in the conservation form of the advective term.

7. A program for functioning a computer as:

   a velocity field acquisition unit which acquires a velocity field; and
   a solution calculation unit which applies the velocity field acquired by the velocity field acquisition unit to a discretization equation obtained by adding at least two operations to the equation including the advective term, and calculates a solution of the discretization equation,
   wherein the two operations include deformation of the advective term into a conservation form, and a term of correcting an error in the conservation form of the advective term.

8. A simulation device estimating a generation source of a diffusion substance which estimates generation source information of fluid on the basis of information from a plurality of observers, comprising:

   an observation information obtaining section which obtains position information of the observer and measured concentration information;
   a virtual ejection spot setting section which sets a plurality of virtual ejection spots in a region which predetermines estimation of a concentration of the diffusion substance; and

the device according to Claim 1 estimating the concentration of the diffusion substance in the virtual ejection spot on the basis of the position information of the observer, the measured concentration information, and information of the virtual ejection spot.

9. A simulation method estimating a generation source of a diffusion substance which estimates generation source information of fluid on the basis of information from a plurality of observers, the method comprising:

obtaining position information of the observer and measured concentration information;

setting a plurality of virtual ejection spots in a region which predetermines estimation of a concentration of the diffusion substance; and

estimating the concentration of the diffusion substance in the virtual ejection spot by the method according to Claim 6 on the basis of the position information of the observer, the measured concentration information, and information of the virtual ejection spot.

FIG. 1

| | a1 | | a2 | | a3 | | a4 | |
|---|---|---|---|---|---|---|---|---|
| 1.0m/s | | 1.1m/s | | 0.9m/s | | 0.8m/s | | 1.0m/s |

FIG. 2

| 1. 0m/s | 1. 1m/s | 0. 9m/s | 0. 8m/s | 1. 0m/s |
|---------|---------|---------|---------|---------|
| −0. 1 | 0. 2 | 0. 1 | 0. 2 | |

FIG. 3

100.0 ⇨ 90.9 ⇨ 111.1 ⇨ 125.0 ⇨ 100.0 ⇨ 100.0

*FIG. 4*

100. 0 ⟹ 100. 0 ⟹ 100. 0 ⟹ 100. 0 ⟹ 100. 0 ⟹ 100. 0

*FIG. 5*

10

103

```
INITIAL CONDI-
TION SETTING
UNIT
```

104

```
VELOCITY
FIELD MEMORY
UNIT
```

105

```
VELOCITY FIELD
ACQUISITION
UNIT
```

101

```
CELL CON-
FIGURATION
SETTING UNIT
```

102

```
CELL CON-
FIGURATION
MEMORY UNIT
```

106

```
VELOCITY AND
PRESSURE CAL-
CULATION UNIT
```

107

```
PRESSURE
FIELD
MEMORY UNIT
```

EP 2 916 247 A1

FIG. 6

*FIG. 7*

| CELL ID | REPRESENTATIVE POINT COORDINATES | VOLUME |
|---------|----------------------------------|--------|
| 0001 | 15. 3237, 225. 705, 214. 235 | 24. 3557 |
| 0002 | 15. 3120, 212. 215, 212. 557 | 11. 7854 |
| ⋮ | ⋮ | ⋮ |
| 2453 | 215. 354, 25. 2221, 44. 8435 | 31. 2236 |

*FIG. 8*

| CELL ID | CELL ID | VOLUME | UNIT NORMAL VECTOR | DISTANCE |
|---------|---------|--------|---------------------|----------|
| 0001 | 0005 | 4.21458 | 0.700243,  0.552466,  0.891941 | 0.422561 |
| 0002 | 0102 | 3.13352 | 0.584276,  −0.617123,  0.527049 | 0.554878 |
| ⋮ | ⋮ | ⋮ | ⋮ | ⋮ |
| 2453 | 2452 | 3.31215 | 0.335786,  0.814266,  0.473517 | 0.515486 |

EP 2 916 247 A1

*FIG. 9*

| CELL ID | VELOCITY VECTOR |
|---------|-----------------|
| 0001 | 1. 221354, 3. 25546, 0. 251356 |
| 0002 | 1. 240134, 3. 15224, 0. 662158 |
| ⋮ | ⋮ |
| 2453 | 3. 22151, 3. 00125, 1. 65855 |

FIG. 10

| CELL ID | PRESSURE |
|---------|----------|
| 0001 | 1. 28568 |
| 0002 | 1. 22325 |
| ⋮ | ⋮ |
| 2453 | 1. 56846 |

## *FIG. 11*

```
              ┌─────────────┐
              │    START    │
              └─────────────┘
                     │
                     ▼
┌──────────────────────────────────────────────┐
│ SET CELL CONFIGURATION AND INITIAL CONDITIONS │──S1
└──────────────────────────────────────────────┘
                     │
                     ▼
┌──────────────────────────────────────────────┐
│         INITIALIZE TARGET TIME STEP           │──S2
└──────────────────────────────────────────────┘
                     │
                     ▼ ◄───────────────────────────┐
┌──────────────────────────────────────────────┐  │
│    ACQUIRE VELOCITY FIELD OF PREVIOUS TIME STEP│──S3
└──────────────────────────────────────────────┘  │
                     │                             │
                     ▼                             │
┌──────────────────────────────────────────────┐  │
│        CALCULATE MATRIX A AND VECTOR b        │──S4
└──────────────────────────────────────────────┘  │
                     │                             │
                     ▼                             │
┌──────────────────────────────────────────────┐  │
│         CALCULATE VELOCITY AND PRESSURE       │──S5
│         VECTOR φ OF TARGET TIME STEP          │  │
└──────────────────────────────────────────────┘  │
                     │         S6                  │
                     ▼                             │
                  ╱──────────╲      No             │
                ╱ IS IT TERMINATED? ╲──────┐       │
                ╲────────────────────╱      │   S7 │
                     │                      ▼      │
                    Yes          ┌──────────────────┐
                     │           │ TARGET TIME STEP + 1│
                     ▼           └──────────────────┘
              ┌─────────────┐
              │     END     │
              └─────────────┘
```

## FIG. 12

10a

103a

```
INITIAL CONDI-
TION SETTING
    UNIT
```

105a

104a

```
DENSITY AND
VELOCITY FIELD
 ACQUISITION
    UNIT
```

101

```
CELL CON-
FIGURATION
SETTING UNIT
```

```
DENSITY AND
 VELOCITY
FIELD MEMORY
    UNIT
```

106a

102

```
SOLUTION CAL-
CULATION UNIT
```

```
CELL CON-
FIGURATION
MEMORY UNIT
```

107

```
PRESSURE
 FIELD
MEMORY UNIT
```

## FIG. 13

10b

103b

VELOCITY FIELD
SETTING UNIT

104b

VELOCITY
FIELD MEMORY
UNIT

105b

VELOCITY FIELD
ACQUISITION
UNIT

101

CELL CON-
FIGURATION
SETTING UNIT

106b

SOLUTION CAL-
CULATION UNIT

102

CELL CON-
FIGURATION
MEMORY UNIT

107b

SOLUTION
MEMORY UNIT

## FIG. 14

10c

103 — INITIAL CONDI-
TION SETTING
UNIT

104 — VELOCITY
FIELD MEMORY
UNIT

105 — VELOCITY FIELD
ACQUISITION
UNIT

101 — CELL CON-
FIGURATION
SETTING UNIT

106c — SOLUTION CAL-
CULATION UNIT

102 — CELL CON-
FIGURATION
MEMORY UNIT

107c — SOLUTION
MEMORY UNIT

*FIG. 15*

FIG. 16

FIG. 17

FIG. 18

FIG. 19

FIG. 20

# EP 2 916 247 A1

## INTERNATIONAL SEARCH REPORT

| | International application No. |
|---|---|
| | PCT/JP2013/079175 |

### A. CLASSIFICATION OF SUBJECT MATTER
*G06F19/00(2011.01)i*

According to International Patent Classification (IPC) or to both national classification and IPC

### B. FIELDS SEARCHED

Minimum documentation searched (classification system followed by classification symbols)
G06F19/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus(JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2010/150758 A1 (Asahi Glass Co., Ltd.), 29 December 2010 (29.12.2010), entire text; all drawings & US 2012/095738 A1 & EP 2455874 A1 & CN 102804187 A & KR 2012-0047863 A | 1–9 |
| A | JP 11-232250 A (Mitsubishi Electric Corp.), 27 August 1999 (27.08.1999), entire text; all drawings (Family: none) | 1–9 |
| A | JP 2003-255055 A (Hitachi Engineering Co., Ltd.), 10 September 2003 (10.09.2003), entire text; all drawings (Family: none) | 1–9 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 January, 2014 (07.01.14) | 14 January, 2014 (14.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

51

**INTERNATIONAL SEARCH REPORT**

International application No.

PCT/JP2013/079175

C (Continuation).   DOCUMENTS CONSIDERED TO BE RELEVANT

| Category* | Citation of document, with indication, where appropriate, of the relevant passages | Relevant to claim No. |
|---|---|---|
| A | Yohei MORINISHI, "Fully Conservative Higher Order Finite Difference Schemes for Incompressible Flow", Nagare, 2009.06, vol.28, no.3, pages 197 to 200 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012132824 A

- JP 2012241260 A

**Non-patent literature cited in the description**

- Numerical Fluid Dynamics. **H. K. VERSTEEG ; W. MALALASEKERA ; MATSUSHITA YOSUKE ; YASUHIRO SAITO ; HIDEYUKI AOKI ; TAKA-TOSHI MIURA.** An Introduction to Computational Fluid Dynamics. Morikita Publishing Co., Ltd, 30 May 2011

- **MORINISHI YOHEI ; RYUMON-PRIZE AWARD.** *Fully Conservative Higher Order Finite Difference Schemes for Incompressible Fluid Analysis,* 2000, vol. 19, 164-170
- **MORINISHI, Y. ; LUND, T. S. ; VASILYEV, O. V. ; MOIN, P.** Fully Conservative Higher Order Finite Difference Schemes for incompressible flow. *J. Comput. Phys.,* 1998, vol. 143, 90-124